**Europäisches Patentamt**

**European Patent Office**

**Office européen des brevets**

(19)

(11) **EP 1 194 890 B1**

(12) **EUROPÄISCHE PATENTSCHRIFT**

(45) Veröffentlichungstag und Bekanntmachung des Hinweises auf die Patenterteilung:
**24.03.2004 Patentblatt 2004/13**

(21) Anmeldenummer: **00943657.7**

(22) Anmeldetag: **30.05.2000**

(51) Int Cl.[7]: **G06N 1/00**

(86) Internationale Anmeldenummer:
**PCT/DE2000/001764**

(87) Internationale Veröffentlichungsnummer:
**WO 2001/001343 (04.01.2001 Gazette 2001/01)**

(54) **ANORDNUNG UND VERFAHREN SOWIE COMPUTERPROGRAMM-ERZEUGNIS UND COMPUTERLESBARES SPEICHERMEDIUM ZUR RECHNERGESTÜTZTEN KOMPENSATION EINES UNGLEICHGEWICHTSZUSTANDS EINES TECHNISCHEN SYSTEMS**

ASSEMBLY, METHOD, COMPUTER PROGRAMME AND STORAGE MEDIUM WHICH CAN BE COMPUTER-READ FOR THE COMPUTER-AIDED COMPENSATION OF A STATE OF INEQUILIBRIUM

DISPOSITIF, PROCEDE, PRODUIT COMPORTANT UN PROGRAMME D'ORDINATEUR ET SUPPORT DE STOCKAGE LISIBLE PAR ORDINATEUR POUR LA COMPENSATION ASSISTEE PAR ORDINATEUR D'UN ETAT DE DESEQUILIBRE D'UN SYSTEME TECHNIQUE

(84) Benannte Vertragsstaaten:
**DE FR GB IT NL**

(30) Priorität: **23.06.1999 DE 19928776**

(43) Veröffentlichungstag der Anmeldung:
**10.04.2002 Patentblatt 2002/15**

(73) Patentinhaber: **SIEMENS AKTIENGESELLSCHAFT 80333 München (DE)**

(72) Erfinder:
- **NEUNEIER, Ralf**
  **D-81667 München (DE)**
- **ZIMMERMANN, Hans-Georg**
  **D-82319 Starnberg/Percha (DE)**

(56) Entgegenhaltungen:
**DE-C- 19 727 795          US-A- 5 768 476**

- **KAZUSHIGE SAGA ET AL: "MOBILE ROBOT CONTROL BY NEURAL NETWORKS USING SELF-SUPERVISED LEARNING" IEEE TRANSACTIONS ON INDUSTRIAL ELECTRONICS, IEEE INC. NEW YORK, US, Bd. 39, Nr. 6, 1. Dezember 1992 (1992-12-01), Seiten 537-541, XP000323862 ISSN: 0278-0046**
- **JACOBS R A ET AL: "LEARNING PIECEWISE CONTROL STRATEGIES IN A MODULAR NEURAL NETWORK ARCHITECTURE" IEEE TRANSACTIONS ON SYSTEMS, MAN AND CYBERNETICS, IEEE INC. NEW YORK, US, Bd. 23, Nr. 2, 1. März 1993 (1993-03-01), Seiten 337-345, XP000398070 ISSN: 0018-9472**
- **KAYAMA M ET AL: "AJUSTING NEURAL NETWORKS FOR ACCURATE CONTROL MODEL TUNING" PROCEEDINGS OF 1995 IEEE INTERNATIONAL CONFERENCE ON FUZZY SYSTEMS. INTERNATIONAL JOINT CONFERENCE OF THE 4TH. IEEE INTERNATIONAL CONFERENCE ON FUZZY SYSTEMS AND THE 2ND. INTERNATIONAL FUZZY ENGINEERING SYMPOSIUM. (FUZZY-IEEE/IFES) YOKOHAMA, MAR. 20 , Bd. 4/5, 20. März 1995 (1995-03-20), Seiten 1995-2000, XP000699213 ISBN: 0-7803-2462-5**

EP 1 194 890 B1

**Beschreibung**

Anordnung und Verfahren sowie Computerprogramm-Erzeugnis und computerlesbares Speichermedium zur rechnergestützten Kompensation eines Ungleichgewichtszustands eines technischen Systems

Die Erfindung betrifft eine Anordnung, ein Verfahren, ein Computerprogramm-Erzeugnis und ein computerlesbares Speichermedium zur rechnergestützten Kompensation eines Ungleichgewichtszustands eines technischen Systems.

Aus [1] ist es bekannt, zur Ermittlung von Zuständen eines dynamischen Systems und einer Dynamik, die einem dynamischen System zugrunde liegt, ein neuronales Netz einzusetzen.

Allgemein wird ein dynamischer Prozeß, der in einem dynamischen System abläuft, üblicherweise durch eine Zustandsübergangsbeschreibung, die für einen Beobachter des dynamischen Prozesses nicht sichtbar ist, und eine Ausgangsgleichung, die beobachtbare Größen des technischen dynamischen Prozesses beschreibt, beschrieben.

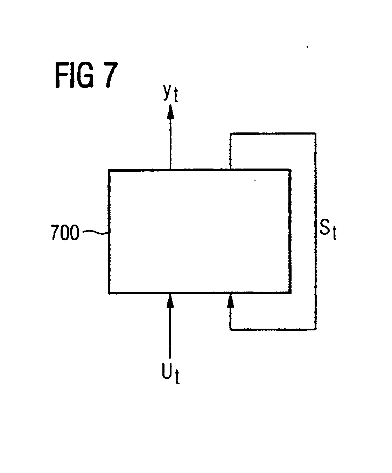

Eine solche Struktur ist in **Fig.7** dargestellt.

Ein dynamisches System 700 unterliegt dem Einfluß einer externen Eingangsgröße u vorgebbarer Dimension, wobei eine Eingangsgröße $u_t$ zu einem Zeitpunkt t mit $u_t$ bezeichnet wird:

$$u_t \in \Re^l,$$

wobei mit 1 eine natürliche Zahl bezeichnet wird.

Die Eingangsgröße $u_t$ zu einem Zeitpunkt t verursacht eine Veränderung des dynamischen Prozesses, der in dem dynamischen System 700 abläuft.

Ein innerer Zustand $s_t$ ($s_t \in \Re^m$) vorgebbarer Dimension m zu einem Zeitpunkt t ist für einen Beobachter des dynamischen Systems 200 nicht beobachtbar.

In Abhängigkeit vom inneren Zustand $s_t$ und der Eingangsgröße $u_t$ wird ein Zustandsübergang des inneren Zustandes $s_t$ des dynamischen Prozesses verursacht und der Zustand des dynamischen Prozesses geht über in einen Folgezustand $s_{t+1}$ zu einem folgenden Zeitpunkt t+1.

Dabei gilt:

$$s_{t+1} = f(s_t, u_t). \qquad (1)$$

wobei mit f(.) eine allgemeine Abbildungsvorschrift bezeichnet wird.

Eine von einem Beobachter des dynamischen Systems 700 beobachtbare Ausgangsgröße $y_t$ zu einem Zeit-punkt t hängt ab von der Eingangsgröße $u_t$ sowie dem inneren Zustand $s_t$.

Die Ausgangsgröße $y_t$ ($y_t \in \Re^n$) ist vorgebbarer Dimension n

Die Abhängigkeit der Ausgangsgröße $y_t$ von der Eingangsgröße $u_t$ und dem inneren Zustand $s_t$ des dynami-schen Prozesses ist durch folgende allgemeine Vorschrift gegeben:

$$y_t = g(s_t, u_t), \qquad (2)$$

wobei mit g(.) eine allgemeine Abbildungsvorschrift bezeichnet wird.

Zur Beschreibung des dynamischen Systems 700 wird in [1] eine Anordnung miteinander verbundener Rechenelemente in Form eines neuronalen Netzes miteinander verbundener Neuronen eingesetzt. Die Verbindungen zwischen den Neuronen des neuronalen Netzes sind gewichtet. Die Gewichte des neuronalen Netzes sind in einem Parametervektor v zusammengefaßt.

Somit hängt ein innerer Zustand eines dynamischen Systems, welches einem dynamischen Prozeß unterliegt, gemäß folgender Vorschrift von der Eingangsgröße $u_t$ und dem inneren Zustand des vorangegangenen Zeitpunktes $s_t$ und dem Parametervektor v ab:

$$s_{t+1} = NN(v, s_t, u_t), \qquad (3)$$

wobei mit NN(.) eine durch das neuronale Netz vorgegebene Abbildungsvorschrift bezeichnet wird.

Die aus [1] bekannte und als $\underline{\text{T}}$ime $\underline{\text{D}}$elay $\underline{\text{R}}$ecurrent $\underline{\text{N}}$eural $\underline{\text{N}}$etwork (TDRNN) bezeichnete Anordnung wird in einer Trainingsphase derart trainiert, daß zu einer Eingangsgröße $u_t$ jeweils eine Zielgröße $y_t^d$ an einem realen dynamischen System ermittelt wird. Das Tupel (Eingangsgröße, ermittelte Zielgröße) wird als Trainingsdatum bezeichnet. Eine Vielzahl solcher Trainingsdaten bilden einen Trainingsdatensatz.

Mit dem Trainingsdatensatz wird das TDRNN trainiert. Eine Übersicht über verschiedene Trainingsverfahren ist ebenfalls in [1] zu finden.

Es ist an dieser Stelle zu betonen, daß lediglich die Ausgangsgröße $y_t$ zu einem Zeitpunkt t des dynamischen Systems 700 erkennbar ist. Der innere Systemzustand $s_t$ ist nicht beobachtbar.

In der Trainingsphase wird üblicherweise folgende Kostenfunktion E minimiert:

$$E = \frac{1}{T} \sum_{t=1}^{T} \left( y_t - y_t^d \right)^2 \to \min_{f,g}, \qquad (4)$$

wobei mit T eine Anzahl berücksichtigter Zeitpunkte bezeichnet wird.

Aus [2] ist eine Anordnung mehrerer miteinander verbundener neuronaler Netze bekannt.

Bei der aus [2] bekannten Anordnung sind mehrere hierarchisch strukturierte neuronale Teilnetze im Rahmen eines sogenannten Gating-Netzwerks in einer parallelen Anordnung zueinander in einer Gesamtstruktur verknüpft.

Bei dem Gating-Netzwerk wird den neuronalen Teilnetzen jeweils ein gleicher Eingabevektor zugeführt. Die neuronalen Teilnetze ermitteln entsprechend ihrer internen Struktur jeweils einen Ausgabevektor. Die Ausgabevektoren der neuronalen Teilnetze werden gewichtet linear aufsummiert.

Ein Trainingsverfahren für das Gating-Netzwerk ist ebenfalls in [2] genannt.

Die bekannten Anordnungen und Verfahren weisen insbesondere den Nachteil auf, daß eine Identifikation bzw. Modellierung eines dynamischen Systems und eine Ermittlung von Zuständen eines dynamischen Systems nur mit unzureichender Genauigkeit möglich ist.

Somit liegt der Erfindung das Problem zugrunde, eine Anordnung anzugeben, mit der eine Modellierung eines dynamischen Systems und die Ermittlung eines Zustands des dynamischen Systems möglich ist und welche Anordnung die Modellierung und die Ermittlung mit einer größeren Genauigkeit als bei den bekannten Anordnungen ermöglicht.

Ferner liegt der Erfindung das Problem zugrunde, ein Verfahren, ein Computerprogramm-Erzeugnis und ein computerlesbares Speichermedium anzugeben, mit welchen eine Modellierung eines dynamischen Systems und die Ermittlung eines Zustands des dynamischen Systems möglich ist und welche die Modellierung und die Ermittlung mit einer größeren Genauigkeit als bei den bekannten Anordnungen ermöglichen.

Die Probleme werden durch die Anordnung sowie die Verfahren mit den Merkmalen gemäß den unabhängigen Ansprüchen gelöst.

Eine Anordnung zur rechnergestützten Kompensation eines Ungleichgewichtszustands eines ersten technischen Systems, umfaßt ein erstes neuronales Netz, welches das erste technische System beschreibt sowie ein zweites neuronales Netz, welches ein zweites technisches System beschreibt. Das erste und das zweite neuronale Netz sind derart miteinander verbunden, daß ein Ungleichgewichtszustand des ersten technischen Systems durch das zweite neuronale Netz kompensierbar ist.

Bei einem Verfahren zur rechnergestützten Kompensation eines Ungleichgewichtszustands eines ersten technischen Systems wird einem ersten neuronalen Netz, welches das erste technische System beschreibt, eine erste Eingangsgröße zugeführt. Für die erste Eingangsgröße wird unter Verwendung des ersten neuronalen Netzes eine erste Ausgangsgröße ermittelt, welche einen Ungleichgewichtszustand des ersten technischen Systems beschreibt. Die erste Ausgangsgröße wird als eine zweite Eingangsgröße einem zweiten neuronalen Netz zugeführt, welches ein zweites technisches System beschreibt. Für die zweite Eingangsgröße wird unter Verwendung des zweiten neuronalen Netzes eine zweite Ausgangsgröße, welche einen Zustand des zweiten technischen Systems beschreibt, derart ermittelt, daß der Ungleichgewichtszustand des ersten technischen Systems durch das zweite neuronale Netz kompensiert wird.

Ein Computerprogramm-Erzeugnis, das ein computerlesbares Speichermedium umfaßt, auf dem ein Programm gespeichert ist, ermöglicht einem Computer, nachdem es in einen Speicher des Computer geladen worden ist, folgende Schritte durchzuführen zur rechnergestützten Kompensation eines Ungleichgewichtszustands eines ersten technischen Systems:

- einem ersten neuronalen Netz, welches das erste technische System beschreibt, wird eine erste Eingangsgröße zugeführt;

- für die erste Eingangsgröße wird unter Verwendung des ersten neuronalen Netzes eine erste Ausgangsgröße ermittelt, welche einen Ungleichgewichtszustand des ersten technischen Systems beschreibt;
- die erste Ausgangsgröße wird als eine zweite Eingangsgröße einem zweiten neuronalen Netz zugeführt, welches ein zweites technisches System beschreibt;
- für die zweite Eingangsgröße wird unter Verwendung des zweiten neuronalen Netzes eine zweite Ausgangsgröße, welche einen Zustand des zweiten technischen Systems beschreibt, derart ermittelt, daß der Ungleichgewichtszustand des ersten technischen Systems durch das zweite neuronale Netz kompensiert wird.

Ein computerlesbares Speichermedium, auf dem ein Programm gespeichert ist, ermöglicht einem Computer, nachdem es in einen Speicher des Computer geladen worden ist, folgende Schritte durchzuführen zur rechnergestützten Kompensation eines Ungleichgewichtszustands eines ersten technischen Systems:

- einem ersten neuronalen Netz, welches das erste technische System beschreibt, wird eine erste Eingangsgröße zugeführt;
- für die erste Eingangsgröße wird unter Verwendung des ersten neuronalen Netzes eine erste Ausgangsgröße ermittelt, welche einen Ungleichgewichtszustand des ersten technischen Systems beschreibt;
- die erste Ausgangsgröße wird als eine zweite Eingangsgröße einem zweiten neuronalen Netz zugeführt, welches ein zweites technisches System beschreibt;
- für die zweite Eingangsgröße wird unter Verwendung des zweiten neuronalen Netzes eine zweite Ausgangsgröße, welche einen Zustand des zweiten technischen Systems beschreibt, derart ermittelt, daß der Ungleichgewichtszustand des ersten technischen Systems durch das zweite neuronale Netz kompensiert wird.

Unter einem Ungleichgewichtszustand eines Systems ist ein Zustand des Systems zu verstehen, der hinsichtlich vorgebbarer Kriterien nicht einem ausgewählten Zustand des Systems, dem Gleichgewichtszustand, entspricht.

Der Gleichgewichtszustand des Systems kann sich beispielsweise dadurch auszeichnen, daß das System in diesem Zustand Stabilität oder Effektivität hinsichtlich eines Übertragungsverhaltens des Systems aufweist.

Die Erfindung weist den besonderen Vorteil auf, daß für ein Training der Anordnung eine geringe Anzahl von Trainingsdaten notwendig ist, um unter Verwendung der trainierte Anordnung eine Modellierung eines dynamischen Systems und die Ermittlung eines Zustands des dynamischen Systems mit hinreichender Genauigkeit durchzuführen zu können.

Bevorzugte Weiterbildungen der Erfindung ergeben sich aus den abhängigen Ansprüchen.

Die im weiteren beschriebenen Weiterbildungen beziehen sich sowohl auf das Verfahren, die Anordnung sowie auf das Computerprogramm-Erzeugnis und das computerlesbare Speichermedium.

Die Erfindung und die im weiteren beschriebenen Weiterbildungen können sowohl in Software als auch in Hardware, beispielsweise unter Verwendung einer speziellen elektrischen Schaltung realisiert werden.

Das erste neuronale Netz kann derart realisiert werden, daß es zumindest ein erstes Eingangs-Rechenelement und ein erstes Ausgangs-Rechenelement aufweist.

Entsprechendes gilt für eine Realisierung des zweiten neuronale Netzes.

Bevorzugt sind zumindest ein Teil der Rechenelemente künstliche Neuronen.

Zu einer Vereinfachung eines Trainings einer Realisierung der Erfindung ist mindestens ein Teil von Verbindungen zwischen Rechenelementen variabel ausgestaltet.

In einer weiteren Ausgestaltung weisen zumindest Teile der Verbindungen gleiche Gewichtswerte auf.

Zu einer Vereinfachung bei einer Beschreibung eines komplexen Gesamtsystems ist es günstig das komplexe Gesamtsystem derart zu strukturieren, daß das erste technische System und das zweite technische System jeweils ein Teilsystem des komplexen Gesamtsystems beschreiben.

Ferner kann aber auch das erste technische System und das zweite technische System identisch sein.

Da durch die Erfindung eine Modellierung eines dynamischen Systems mit hinreichender Genauigkeit möglich ist, wird eine Realisierung bevorzugt zur Ermittlung einer Dynamik eines Systems eingesetzt.

Ferner wird eine Ausgestaltung eingesetzt zu einer Prognose eines zukünftigen Zustands eines Systems sowie zu einer Überwachung und/oder Steuerung eines Systems.

Bevorzugt ist das System ein chemischer Reaktor.

Ausführungsbeispiele der Erfindung sind in den Figuren dargestellt und werden im weiteren näher erläutert:

Es zeigen

Figur 1    eine Skizze eines chemischen Reaktors, von dem Größen gemessen werden, welche mit der Anordnung gemäß einem ersten Ausführungsbeispiel weiterverarbeitet werden;

Figur 2     eine Skizze einer Anordnung gemäß dem ersten Ausführungsbeispiel;

Figur 3     eine Skizze, welche einen Verfahrensablauf gemäß dem ersten oder zweiten Ausführungsbeispiel beschreibt;

Figur 4     eine Skizze einer Anordnung gemäß dem ersten Ausführungsbeispiel;

Figur 5     eine Skizze einer Anordnung gemäß einem zweiten Ausführungsbeispiel;

Figur 6     eine Skizze einer Anordnung bei einem Training gemäß dem zweiten Ausführungsbeispiel;

Figur 7     eine Skizze einer allgemeinen Beschreibung eines dynamischen Systems.

**Erstes Ausführungsbeispiel: Chemischer Reaktor**

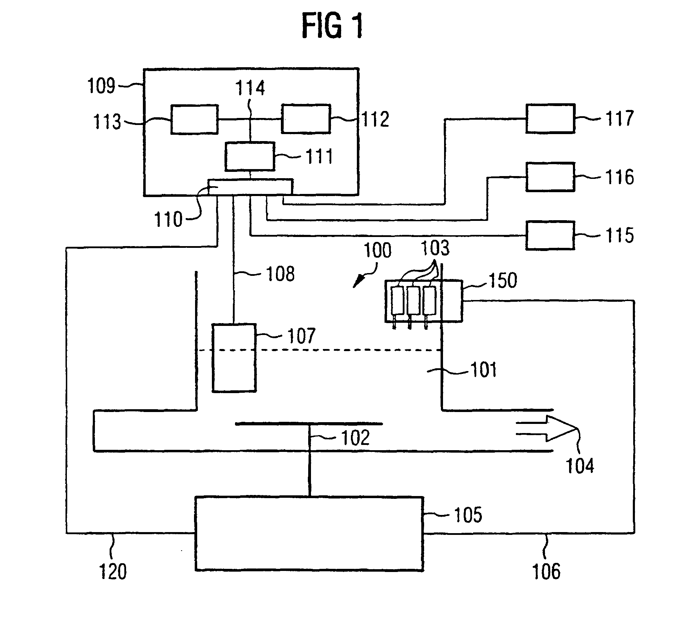

**Fig.1** zeigt einen chemischen Reaktor 100, der mit einer chemischen Substanz 101, welche ein Gemisch mehrerer Grundsubstanzen 103 ist, gefüllt ist. Der chemische Reaktor 100 umfaßt einen Rührer 102, mit dem die chemische Substanz 101 gerührt wird.

Durch eine Einspritzvorrichtung 150 werden die Grundsubstanzen 103 getrennt voneinander in den Reaktor 100 eingespritzt.

Die in den chemischen Reaktor 100 eingespritzten Grundsubstanzen 103 reagieren während eines vorgebbaren Zeitraums in dem chemischen Reaktor 100 miteinander, wobei die chemische Substanz 101 gebildet wird. Eine aus dem Reaktor 100 ausfließende Substanz 104 wird aus dem chemischen Reaktor 100 über einen Ausgang abgeleitet.

Die Einspritzvorrichtung 150 ist über eine Leitung mit einer Steuereinheit 105 verbunden, mit der über ein Steuersignal 106 ein überwachtes Einspritzen einer beliebigen Grundsubstanz 103 in den Reaktor 100 einstellbar ist.

Ferner ist ein Meßgerät 107 vorgesehen, mit dem Konzentrationen von den in der chemischen Substanz 101 enthaltenen Grundsubstanzen 103 und eine Temperatur in dem Reaktor 100 sowie ein in dem Reaktor 100 herrschender Druck gemessen werden.

Meßsignale 108 werden einem Rechner 109 zugeführt, in dem Rechner 109 über eine Eingangs-/Ausgangsschnittstelle 110 und einem Analog/Digital-Wandler 111 digitalisiert und in einem Speicher 112 gespeichert. Ein Prozessor 113 ist ebenso wie der Speicher 112 über einen Bus 114 mit dem Analog/Digital-Wandler 111 verbunden. Der Rechner 109 ist ferner über die Eingangs-/Ausgangsschnittstelle 110 mit der Steuerung 105 der Einspritzvorrichtung 150 verbunden und somit steuert der Rechner 109 das Einspritzen der Grundsubstanzen 103 in den Reaktor 100.

Der Rechner 109 ist ferner über die Eingangs-/Ausgangsschnittstelle 110 mit einer Tastatur 115, einer Computermaus 116 sowie einem Bildschirm 117 verbunden.

Der chemische Reaktor 100 als dynamisches technisches System 200 unterliegt somit einem dynamischen Prozeß.

Der chemische Reaktor 100 wird mittels einer Zustandsbeschreibung beschrieben. Die Eingangsgröße $u_t$ setzt sich in diesem Fall zusammen aus einer Angabe über die Temperatur, die in dem chemischen Reaktor 100 herrscht sowie dem in dem chemischen Reaktor 100 herrschenden Druck und der zu dem Zeitpunkt t eingestellten Rührfrequenz. Somit ist die Eingangsgröße $u_t$ ein dreidimensionaler Vektor.

Ziel der im weiteren beschriebenen Modellierung des chemischen Reaktors 100 ist die Bestimmung der dynamischen Entwicklung der Konzentrationen der Grundsubstanzen 103 in dem Reaktor 100, um somit eine effiziente Erzeugung eines zu produzierenden vorgebbaren Zielstoffes als ausfließende Substanz 104 zu ermöglichen.

Eine effiziente Erzeugung des zu produzierenden vorgebbaren Zielstoffes ist dann möglich, wenn die Grundsubstanzen 103 in einem der durchzuführenden Reaktion entsprechenden Verhältnis der Konzentrationen der Grundsubstanzen 103 gemischt werden.

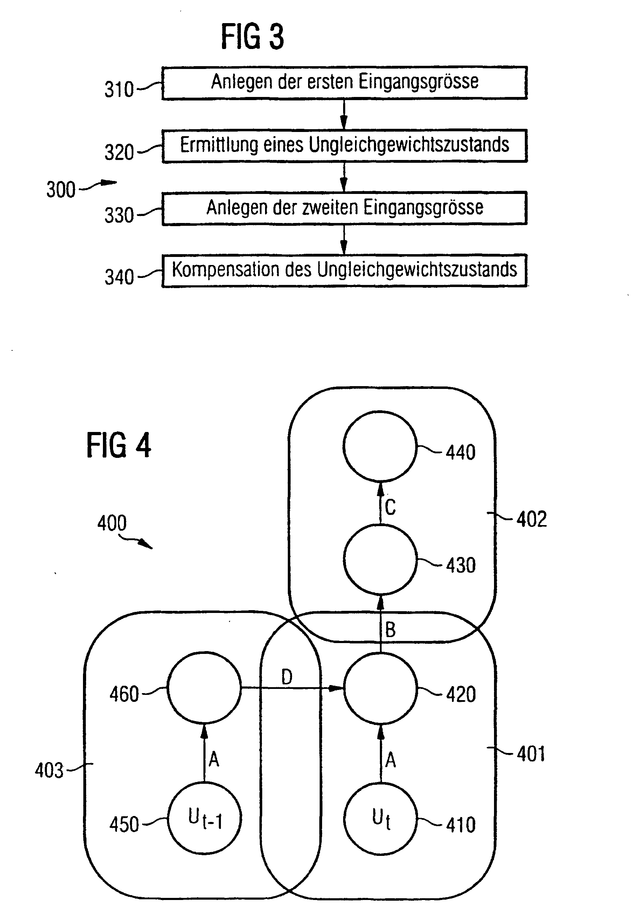

Die Bestimmung der dynamischen Entwicklung der Konzentrationen der Grundsubstanzen 103 erfolgt unter Verwendung der im weiteren beschriebenen und in **Fig.3** dargestellten Anordnung.

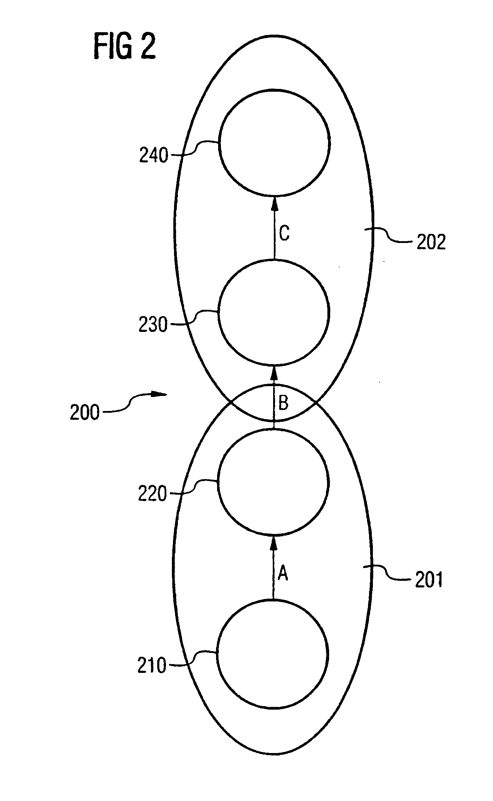

Zum einfacheren Verständnis der der Anordnung zugrunde liegenden Prinzipien ist in **Fig.2** eine Grundstruktur 200 als ein zweiteiliges neuronales Netz, bei welchem ein erstes 201 und ein zweites neuronales Netz 202 hintereinander geschaltet sind, dargestellt.

Die im weiteren beschriebenen Anordnungen sind jeweils so zu verstehen, daß jede Neuronenschicht bzw. jede Teilschicht eine vorgebbare Anzahl von Neuronen, d.h. Rechenelementen, aufweist.

Bei der in **Fig.2** dargestellten Grundstruktur sind das erste neuronale Netz 201 und das zweite neuronale Netz 202 derart miteinander verknüpft, daß Ausgänge des ersten neuronalen Netzes 201 mit Eingängen des zweiten neuronalen Netzes 202 verbunden sind.

Das erste neuronale Netz 201 weist eine erste Eingangsschicht 210 mit einer vorgebbaren Anzahl von Eingangs-Rechenelementen, d.h. Eingangsneuronen, auf, denen Eingangsgrößen $u_t$ zu einem vorgebbaren Zeitpunkt t, d.h. im weiteren beschriebene Zeitreihenwerte, zuführbar sind.

Desweiteren weist das erste neuronale Netz 210 Ausgangs-Rechenelemente, d.h. Ausgangsneuronen, einer ersten Ausgangsschicht 220 auf. Die Ausgangsneuronen der ersten Ausgangsschicht 220 sind mit den Eingangsneuronen der ersten Eingangsschicht 210 verbunden. Die Gewichte der Verbindungen sind in einer ersten Verbindungsmatrix A enthalten.

Das zweite neuronale Netz 202 ist derart mit dem ersten neuronalen Netz 201 verbunden, daß die Ausgangsneuronen der ersten Ausgangsschicht 220 mit Eingangsneuronen einer zweiten Eingangsschicht 230 gemäß einer durch eine zweite Verbindungsmatrix B gegebenen Struktur verbunden sind.

Bei dem zweiten neuronalen Netz 202 sind Ausgangsneuronen einer zweiten Ausgangsschicht 240 mit den Eingangsneuronen der zweiten Eingangsschicht 230 verbunden. Gewichte der Verbindungen sind in einer dritten Verbindungsmatrix C enthalten.

An den Ausgangsneuronen der zweiten Ausgangsschicht 240 sind die Ausgangsgrößen $y_t$ für jeweils einen Zeitpunkt t abgreifbar.

Aufbauend auf diese Grundstruktur wird im weiteren die in **Fig.4** dargestellte erweiterte Anordnung gebildet erläutert.

**Fig.4** zeigt ein drittes neuronales Netz 403, welches mit dem ersten neuronalen Netz 401 verknüpft ist.

Das dritte neuronale Netz 403 umfaßt eine dritte Eingangsschicht 450 mit Eingangsneuronen, welche mit Neuronen einer versteckten Schicht 460 gemäß der durch die erste Verbindungsmatrix A gegebenen Struktur verbunden sind.

Das dritte neuronale Netz 403 ist derart mit dem ersten neuronalen Netz 401 verbunden, daß die Neuronen der versteckten Schicht 460 mit den Ausgangsneuronen der ersten Ausgangsschicht 420 verbunden sind. Gewichte der Verbindungen sind in einer vierten Verbindungsmatrix D enthalten.

Die Eingangsneuronen der dritten Eingangsschicht 450 sind derart ausgestaltet, daß ihnen die Zeitreihenwerte $u_t$ zu einem vorgebbaren Zeitpunkt t-1 als Eingangsgrößen $u_{t-1}$ zuführbar sind.

Durch die beschriebene Ausgestaltung des ersten neuronalen Netzes 401 und des dritten neuronalen Netzes 403 gemäß **Fig.4** ist das Prinzip der sogenannten geteilten Gewichtswerte (Shared Weights), d.h. dem Grundsatz, daß äquivalente Verbindungsmatrizen in einem neuronalen Netz zu einem jeweiligen Zeitpunkt die gleichen Werte aufweisen, realisiert.

Bei der Anordnung gemäß **Fig.4** wird insbesondere durch die geteilten Gewichtswerte sowie durch die beschriebene Ausgestaltung der ersten 410 und der dritten 450 Eingangsschicht erreicht, daß Zustände $s_{t-1}$ und $s_t$, welche durch die erste Ausgangsschicht 420 und die versteckte Schicht 460 repräsentiert werden, zwei zeitlich aufeinanderfolgende Zustände t-1 und t eines Systems s beschreiben.

Als Trainingsverfahren wird das Backpropagation-Verfahren eingesetzt. Der Trainingsdatensatz wird auf folgende Weise aus dem chemischen Reaktor 400 gewonnen.

Es werden mit dem Meßgerät 407 zu vorgegebenen Eingangsgrößen die Konzentrationen der Grundsubstanzen 103 gemessen und dem Rechner 409 zugeführt, dort digitalisiert und als Zeitreihenwerte $u_t$ in einem Speicher gemeinsam mit den entsprechenden Eingangsgrößen, die zu den gemessenen Größen korrespondieren, zeitlich aufeinanderfolgend gruppiert.

Bei einem Training der Anordnung werden diese Zeitreihenwerte $u_t$ der Anordnung als Trainingsdatensatz zusammen mit der Angabe über das vorgegebene optimale Verhältnis der Konzentrationen der Grundsubstanzen zugeführt.

Die Anordnung aus **Fig.4** wird unter Verwendung des Trainingsdatensatzes trainiert.

Zur besseren Veranschaulichung der durch die Anordnung erreichten Transformationen sind in **Fig.3** Schritte eines Verfahrensablaufs 300 mit Bezug auf das erste Ausführungsbeispiels dargestellt.

In einem ersten Schritt 310 werden der Anordnung die Zeitreihenwerte der Eingangsgröße $u_t$, welche die Angaben über die Temperatur, den Druck und die Rührfrequenz in dem Reaktor 100 enthalten, zugeführt.

In einem zweiten Schritt 320 wird unter Verwendung der Eingangsgröße $u_t$ eine Ausgangsgröße $s_t$ des ersten neuronalen Netzes ermittelt, welche beschreibt, ob die Grundsubstanzen in dem für eine effektive Reaktion der Grundsubstanzen optimierten Verhältnis miteinander, welches einen sogenannten Gleichgewichtszustand in dem Reaktor darstellt, gemischt werden. Somit wird in dem zweiten Schritt 320 ermittelt, ob sich ein Zustand in dem Reaktor in einem Gleichgewichts- oder Ungleichgewichtszustand befindet.

In einem dritten Schritt 330 wird die Ausgangsgröße $s_t$ des ersten neuronalen Netzes als Eingangsgröße dem zweiten neuronalen Netz zugeführt.

In einem vierten Schritt 340 ermittelt das zweite neuronale Netz die Ausgangsgröße $y_t$, welche eine dynamische Veränderung der Konzentrationen der Grundsubstanzen beschreibt.

In dem vierten Schritt 340 wird unter Verwendung der ermittelten Veränderung der Konzentrationen der Grundsubstanzen ein Zustand in dem Reaktor bestimmt, mit welchem der Ungleichgewichtszustand kompensiert werden kann.

Die gemäß dem oben beschriebenen Trainingsverfahren trainierte Anordnung aus **Fig.4** wird zur Steuerung und Regelung des Einspritzvorgangs der Grundsubstanzen 103 in den chemischen Reaktor 100 eingesetzt.

Ziel der Regelung und der Steuerung ist ein automatisiertes, kontinuierliches Einspritzen der Grundsubstanzen 103 in den chemischen Reaktor 100 derart, daß das Konzentrationsverhältnis der Grundsubstanzen 103 in dem Reaktor 100 ein konstantes, für die durchzuführenden Reaktion optimales Verhältnis aufweist. Damit ist eine effiziente Erzeugung des zu produzierenden vorgebbaren Zielstoffes als ausfließende Substanz 104 möglich.

Dazu wird für eine erste Eingangsgröße $u_{t-1}$ zu einem Zeitpunkt t-1 und eine zweite Eingangsgröße $u_t$ zu einen Zeitpunkt t eine Prognosegröße $y_t$ in einer Anwendungsphase von der Anordnung ermittelt, die anschließend als Steuergröße 420 nach einer eventuellen Aufbereitung der ermittelten Größe der Einspritzvorrichtung 150 zur Steuerung des Einspritzens der Grundsubstanzen 103 in dem chemischen Reaktor 100 zugeführt wird (vgl. **Fig.1**).

Durch die Strukturierung der Anordnung in das erste neuronale Netz und das zweite neuronale Netz, insbesondere durch eine durch diese Strukturierung gebildete weitere Fehlersignale produzierende Ausgangsschicht, wird erreicht, daß für ein Training der Anordnung eine geringe Anzahl von Trainingsdaten notwendig ist, um eine hinreichender Genauigkeit bei der Modellierung des dynamischen Systems zu gewährleisten.

2. Ausführungsbeispiel: Wechselkursprognose

In einem zweiten Ausführungsbeispiels wird die oben beschriebene Anordnung gemäß **Fig.4** für eine Wechselkursprognose eines $-DM Wechselkurses eingesetzt.

Als Eingangsgröße $u_t$ wird eine Zeitreihe mit Zeitreihenwerten, welche jeweils Angaben über ökonomische Kennzahlen, beispielsweise Zinssätze von kurzfristigen und langfristigen Zinsen in einem $-Raum und einem DM-Raum, Inflationsraten und Angaben über ein Wirtschaftswachstum in dem $-Raum und dem DM-Raum, umfassen, der Anordnung zugeführt.

Als Ausgangsgröße $y_t$ wird von der Anordnung eine Veränderung des $-DM Wechselkurses prognostiziert.

Bei der Anordnung für die Wechselkursprognose weisen insbesondere die Verbindungsmatrizen A,B,C und D eine besondere Ausgestaltung auf.

Die erste Verbindungsmatrix A ist derart mit Gewichten besetzt, daß jeweils einem Neuron der ersten Ausgangsschicht nur eine begrenzte Anzahl von Neuronen der ersten Eingangsschicht des ersten neuronalen Netzes (in diesem Fall: maximal sieben Neuronen) zugeordnet sind. Eine solche Verbindungsmatrix wird als "sparse connector" bezeichnet.

Ferner ist die Anordnung für die Wechselkursprognose derart ausgestaltet, daß die erste Ausgangsschicht des ersten neuronalen Netzes eine große Anzahl von Ausgangsneuronen aufweist (in diesem Fall: 200 Ausgangsneuronen).

Die zweite Verbindungsmatrix B, in diesem Fall ein hochdimensionaler Vektor, ist derart ausgestaltet, daß unter Verwendung der Verbindungsmatrix B die hochdimensionale Ausgangsgröße $s_t$ des ersten neuronalen Netzes (Dimension = 200) auf eine eindimensionale Größe abgebildet wird. Insbesondere weisen alle Gewichte der zweiten Verbindungsmatrix B den Wert 1 auf.

Dementsprechend weist die dritte Verbindungsmatrix C nur einen Gewichtswert, welcher zusätzlich nur positive Werte annehmen kann, auf.

Die vierte Verbindungsmatrix D ist als eine Diagonalmatrix ausgestalten, bei der alle Diagonalwerte den Wert 1 aufweisen.

Als Trainingsverfahren wird ebenfalls das Backpropagation-Verfahren eingesetzt. Ein Trainingsdatensatz wird auf folgende Weise gebildet.

Es werden bekannte Wechselkursveränderungen als Zeitreihenwerte $u_t$ gemeinsam mit den entsprechenden ökonomischen Kennzahlen, die zu den gekannten Wechselkursveränderungen korrespondieren, zeitlich aufeinanderfolgend gruppiert.

Bei einem Training der Anordnung werden diese Zeitreihenwerte $u_t$ der Anordnung als Trainingsdatensatz zugeführt.

Bei dem Training weist eine Zielfunktion E, welche in der ersten Ausgangsschicht des ersten neuronalen Netzes gebildet wird, folgende Vorschrift auf:

$$E = \frac{1}{T} \sum_t \ln\left(\frac{P_{t+1}}{P_t}\right) \ast z_t^a \ \to \ \max \qquad (5)$$

mit:

t : Index, welcher einen Zeitpunkt beschreibt
T : betrachtetes Zeitintervall
a : Index für ein Neuron
ln(...) : natürlicher Logarithmus
$p_t$, $p_{t+1}$ : Wechselkurs zum Zeitpunkt t bzw. t+1
$z_t^a$ : eine einem Neuron a zugeordnete gewechselte Geldmenge in DM.

Ferner gelten folgende, ein dynamisches Wechselkurssystem beschreibende Beziehungen:

$$m_{t+1}^a = m_t^a - z_t^a \text{ (Marktmechanik des Wechselkurssystems)} \tag{6}$$

$$n_{t+1}^a = n_t^a - p_t * z_t^a \text{ (Marktmechanik des Wechselkurssystems)} \tag{7}$$

$$\sum_a z_t^a = 0 \quad \text{(Gleichgewichtsbedingung des Wechselkurssystems)} \tag{8}$$

mit:

$m_{t+1}^a$, $m_t^a$ : eine einem Neuron a zugeordnete Geldmenge in $ zu einem Zeitpunkt t+1 bzw. t
$n_{t+1}^a$, $n_t^a$ : : eine einem Neuron a zugeordnete Geldmenge in DM zu einem Zeitpunkt t+1 bzw. t.

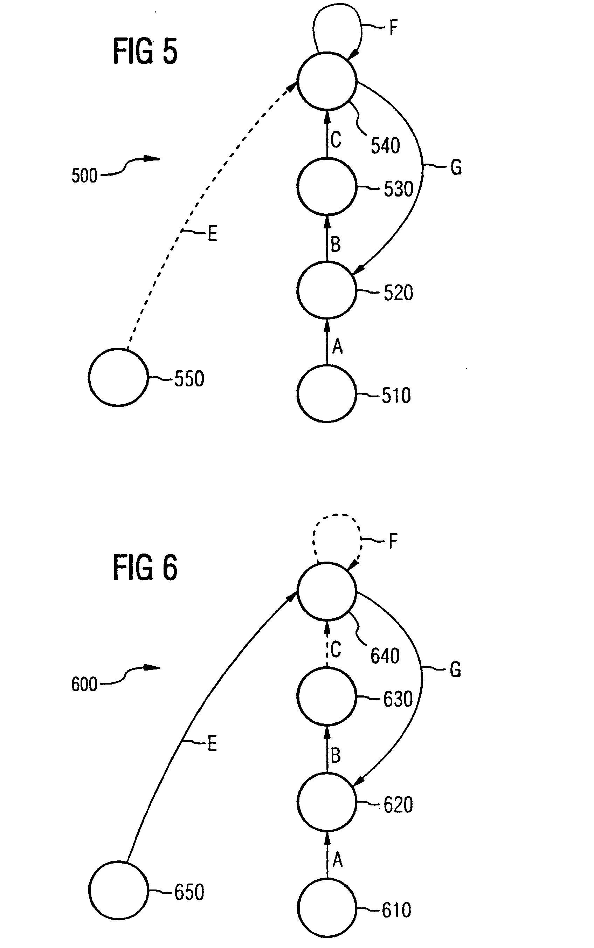

Der Anordnung für die Wechselkursprognose liegen folgende Prinzipien zugrunde:
Ein durch einen Überschuß einer Geldmenge verursachter Ungleichgewichtszustand des Wechselkurssystems wird durch eine Veränderung des Wechselkurses kompensiert.
Ein Zustand des Wechselkurssystems wird durch ein Entscheidungsmodell, welches in dem ersten neuronalen Netz realisiert ist, beschrieben. In diesem Fall repräsentiert jeweils ein Neuron einen sogenannten "Agenten". Dementsprechend wird die Anordnung für die Wechselkursprognose auch als "Multi-Agent-System" bezeichnet.
In dem zweiten neuronalen Netz ist ein Marktmodell realisiert, mit welchem ein Ungleichgewichtszustands, welcher durch das Entscheidungsmodell erzeugt wird, durch eine Veränderung eines Zustands eines Wechselkursmarktes kompensiert wird.
Ein Ungleichgewichtszustand des Entscheidungsmodells ist eine Ursache für eine Zustandsänderung des Markmodells.
Im folgenden wird eine Alternative des zweiten Ausführungsbeispiels beschrieben.
Das alternative Ausführungsbeispiel unterscheidet sich von dem zweiten Ausführungsbeispiel in den nachfolgend beschrieben Punkten. Die entsprechende Anordnung des alternativen Ausführungsbeispiels für die Wechselkursprognose ist jeweils in **Fig.5** (Anwendungsphase) und **Fig.6** (Trainingsphase) dargestellt.
Neuronenverbindungen, welche unterbrochen sind, sind in den Figuren gestrichelt gezeichnet. Geschlossene Neuronenverbindungen sind durch durchgezogene Linien dargestellt.
Die ursprüngliche Anordnung für die Wechselkursprognose gemäß **Fig.4** kann dahingehend geändert werden, daß anstelle des dritten neuronalen Netzes eine vierte Eingangsschicht 550 mit Eingangsneuronen verwendet wird, welche mit den Ausgangsneuronen der zweiten Ausgangsschicht 540 des zweiten neuronalen Netzes verbunden sind. Gewichte der Verbindungen sind in einer fünften Verbindungsmatrix E enthalten. Die Verbindungen sind derart realisiert, daß sie in einer Anwendungsphase unterbrochen und in einer Trainingsphase geschlossen sind.
Ferner weist die zweite Ausgangsschicht 540 des zweiten neuronalen Netzes eine Rückführung auf, mit der die Ausgangssignale der zweiten Ausgangsschicht 540 in die zweite Ausgangsschicht 540 zurückgeführt werden. Gewichte der Rückführung sind in einer sechsten Verbindungsmatrix F enthalten. Die Rückführung ist derart realisiert, daß sie in der Anwendungsphase geschlossen und in der Trainingsphase unterbrochen ist.
Darüber hinaus sind die Ausgangsneuronen der ersten Ausgangsschicht 520 des ersten neuronalen Netzes mit den Ausgangsneuronen 540 des zweiten neuronalen Netzes verbunden. Gewichte der Verbindungen sind in einer siebten Verbindungsmatrix G enthalten.
Die Verbindungen zwischen der zweiten Eingangsschicht 530 und der zweiten Ausgangsschicht 540 sind derart ausgestaltet, daß sie in einer Anwendungsphase geschlossen und in einer Trainingsphase unterbrochen sind.

Die fünfte Verbindungsmatrix E und die sechste Verbindungsmatrix F ist jeweils eine Identitätsmatrix Id.
Die siebte Verbindungsmatrix G ist derart ausgestaltet, daß eine unter Verwendung der siebten Verbindungsmatrix G durchgeführte Abbildung folgender Vorschrift gehorcht:

$$\frac{d}{d(\ln(\frac{p_{t+1}}{p_t}))} \left( \sum_a z_t^a \right) < 0 \tag{9}$$

mit :

$$\frac{d}{d(\ln(\frac{p_{t+1}}{p_t}))} (\ldots) \qquad : \text{Ableitung nach } \ln(\frac{p_{t+1}}{p_t}).$$

Ein Training der alternativen Anordnung wird entsprechend dem zweiten Ausführungsbeispiels durchgeführt. Die alternative Trainingsanordnung ist in **Fig.6** dargestellt.
Bei dem Training werden die Rückführung und die Verbindungen zwischen der zweiten Eingangsschicht 530 und der zweiten Ausgangsschicht 540 unterbrochen.
In der Anwendungsphase kann eine Veränderung eines Wechselkurses, mit welcher ein Ungleichgewichtszustand des Marktes kompensiert werden kann, nach einem iterativen Prozeß an der zweiten Ausgangsschicht des zweiten neuronalen Netzes abgegriffen werden.
Im Rahmen des iterativen Prozesses wird folgendes Fixpunktproblem gelöst:

$$\ln(\frac{p_{t+1}}{p_t})_{n+1} = (\ln(\frac{p_{t+1}}{p_t}))_n + \varepsilon * (\sum_a z_t^a((\ln(\frac{p_{t+1}}{p_t}))_n)) \tag{10}$$

$$\ln(\frac{p_{t+1}}{p_t}))_n \rightarrow \text{Fixpunkt}$$

mit:

$\varepsilon$ : Gewicht der dritten Verbindungsmatrix C, $\varepsilon > 0$.
N : Index für einen Iterationsschritt

Der alternativen Anordnung für die Wechselkursprognose liegen folgende Prinzipien zugrunde:
Das Wechselkurssystem befindet sich zu jedem Zeitpunkt t in einem Gleichgewicht.
Durch eine Veränderung eines Zustands des Marktmodells kann ein Ungleichgewichtszustand des Entscheidungsmodells verhindert werden.
Im weiteren sind eine mögliche Realisierungen des oben beschriebenen zweiten Ausführungsbeispiels und eine mögliche Realisierung der Alternative des zweiten Ausführungsbeispiels angegeben für das Programm SENN, Version 2.3. Die Realisierungen umfassen jeweils drei Abschnitte, die jeweils einen Programmcode enthalten, die zur Verarbeitung in SENN, Version 2.3 erforderlich sind.
Mögliche Realisierung des zweiten Ausführungsbeispiels:

**1. Parameter-Datei:**

Für die Anwendungsphase:

```
BpNet {
  Globals {
    WtPenalty {
     sel NoPenalty
      Weigend {
        Lambda { 0.000000 }
        AutoAdapt { T }
        w0 { 1.000000 }
        DeltaLambda { 0.000001 }
        ReducFac { 0.900000 }
        Gamma { 0.900000 }
        DesiredError { 0.000000 }
      }
      WtDecay {
        Lambda { 0.010000 }
        AutoAdapt { F }
        AdaptTime { 10 }
        EpsObj { 0.001000 }
        ObjSet { Training }
        EpsilonFac { 1.000000 }
      }
      ExtWtDecay {
        Lambda { 0.001000 }
        AutoAdapt { F }
        AdaptTime { 10 }
        EpsObj { 0.001000 }
        ObjSet { Training }
        EpsilonFac { 1.000000 }
      }
      Finnoff {
        AutoAdapt { T }
        Lambda { 0.000000 }
        DeltaLambda { 0.000001 }
        ReducFac { 0.900000 }
        Gamma { 0.900000 }
        DesiredError { 0.000000 }
      }
    }
    ErrorFunc {
     sel LnCosh
      |x| {
        parameter { 0.050000 }
      }
      LnCosh {
        parameter { 2.000000 }
      }
    }
    AnySave {
      file_name { f.Globals.dat }
    }
    AnyLoad {
      file_name { f.Globals.dat }
    }
    ASCII { F }
  }
  LearnCtrl {
   sel Stochastic
    Stochastic {
      PatternSelection {
       sel Permute
        SubSample {
          Percent { 0.500000 }
        }
        ExpRandom {
```

```
                Lambda { 2.000000 }
            }
        }
        WtPruneCtrl {
            PruneSchedule {
             sel FixSchedule
              FixSchedule {
                Limit_0 { 10 }
                Limit_1 { 10 }
                Limit_2 { 10 }
                Limit_3 { 10 }
                RepeatLast { T }
              }
              DynSchedule {
                MaxLength { 4 }
                MinimumRuns { 0 }
                Training { F }
                Validation { T }
                Generalization { F }
              }
              DivSchedule {
                Divergence { 0.100000 }
                MinEpochs { 5 }
              }
            }
            PruneAlg {
             sel FixPrune
              FixPrune {
                Perc_0 { 0.100000 }
                Perc_1 { 0.100000 }
                Perc_2 { 0.100000 }
                Perc_3 { 0.100000 }
              }
              EpsiPrune {
                DeltaEps { 0.050000 }
                StartEps { 0.050000 }
                MaxEps { 1.000000 }
                ReuseEps { F }
              }
            }
            Tracer {
                Active { F }
                Set { Validation }
                File { trace }
            }
            Active { F }
            Randomize { 0.000000 }
            PruningSet { Train.+Valid. }
            Method { S-Pruning }
        }
        StopControl {
            EpochLimit {
                Active { F }
                MaxEpoch { 60 }
            }
            MovingExpAverage {
                Active { F }
                MaxLength { 4 }
                Training { F }
                Validation { T }
                Generalization { F }
                Decay { 0.900000 }
            }
            CheckObjectiveFct {
                Active { F }
                MaxLength { 4 }
                Training { F }
                Validation { T }
                Generalization { F }
            }
            CheckDelta {
                Active { F }
                Divergence { 0.100000 }
            }
        }
        EtaCtrl {
            Mode {
             sel EtaSchedule
```

```
            EtaSchedule {
              SwitchTime { 10 }
              ReductFactor { 0.950000 }
            }
            FuzzCtrl {
              MaxDeltaObj { 0.300000 }
              MaxDelta2Obj { 0.300000 }
              MaxEtaChange { 0.020000 }
              MinEta { 0.001000 }
              MaxEta { 0.100000 }
              Smoother { 1.000000 }
            }
          }
        Active { F }
      }
      LearnAlgo {
       sel OnlineBackProp
        VarioEta {
          MinCalls { 50 }
        }
        MomentumBackProp {
          Alpha { 0.050000 }
        }
        Quickprop {
          Decay { 0.050000 }
          Mu { 2.000000 }
        }
      }
      AnySave {
        file_name { f.Stochastic.dat }
      }
      AnyLoad {
        file_name { f.Stochastic.dat }
      }
      BatchSize { 1 }
      Eta { 0.001000 }
      DerivEps { 0.000000 }
    }
    TrueBatch {
      PatternSelection {
       sel Sequential
        SubSample {
          Percent { 0.500000 }
        }
        ExpRandom {
          Lambda { 2.000000 }
        }
      }
      WtPruneCtrl {
        Tracer {
          Active { F }
          Set { Validation }
          File { trace }
        }
        Active { F }
        Randomize { 0.000000 }
        PruningSet { Train.+Valid. }
        Method { S-Pruning }
      }
      EtaCtrl {
        Active { F }
      }
      LearnAlgo {
       sel VarioEta
        VarioEta {
          MinCalls { 200 }
        }
        MomentumBackProp {
          Alpha { 0.050000 }
        }
        Quickprop {
          Decay { 0.050000 }
          Mu { 2.000000 }
        }
      }
      AnySave {
        file_name { f.TrueBatch.dat }
      }
```

```
AnyLoad {
  file_name { f.TrueBatch.dat }
}
Eta { 0.050000 }
DerivEps { 0.000000 }
}
LineSearch {
  PatternSelection {
   sel Sequential
    SubSample {
      Percent { 0.500000 }
    }
    ExpRandom {
      Lambda { 2.000000 }
    }
  }
  WtPruneCtrl {
    Tracer {
      Active { F }
      Set { Validation }
      File { trace }
    }
    Active { F }
    Randomize { 0.000000 }
    PruningSet { Train.+Valid. }
    Method { S-Pruning }
  }
  LearnAlgo {
   sel ConjGradient
    VarioEta {
      MinCalls { 200 }
    }
    MomentumBackProp {
      Alpha { 0.050000 }
    }
    Quickprop {
      Decay { 0.050000 }
      Mu { 2.000000 }
    }
    Low-Memory-BFGS {
      Limit { 2 }
    }
  }
  AnySave {
    file_name { f.LineSearch.dat }
  }
  AnyLoad {
    file_name { f.LineSearch.dat }
  }
  EtaNull { 1.000000 }
  MaxSteps { 10 }
  LS_Precision { 0.500000 }
  TrustRegion { T }
  DerivEps { 0.000000 }
  BatchSize { 2147483647 }
}
GeneticWeightSelect {
  PatternSelection {
   sel Sequential
    SubSample {
      Percent { 0.500000 }
    }
    ExpRandom {
      Lambda { 2.000000 }
    }
  }
  LearnAlgo {
   sel VarioEta
    VarioEta {
      MinCalls { 200 }
    }
    MomentumBackProp {
      Alpha { 0.050000 }
    }
  }
  ObjFctTracer {
    Active { F }
    File { objFunc }
```

```
            }
SearchControl {
  SearchStrategy {
   sel HillClimberControl
    HillClimberControl {
      %InitialAlive ( 0.950000 )
      InheritWeights ( T )
      Beta ( 0.100000 )
      MutationType ( DistributedMacroMutation )
      MaxTrials ( 50 )
    }
    PBILControl {
      %InitialAlive ( 0.950000 )
      InheritWeights ( T )
      Beta ( 0.100000 )
      Alpha ( 0.100000 )
      PopulationSize ( 40 )
    }
    PopulationControl {
      pCrossover ( 1.000000 )
      CrossoverType ( SimpleCrossover )
      Scaling ( T )
      ScalingFactor ( 2.000000 )
      Sharing ( T )
      SharingFactor ( 0.050000 )
      PopulationSize ( 50 )
      min.%InitialAlive ( 0.010000 )
      max.%InitialAlive ( 0.100000 )
    }
  }
  pMutation ( 0.000000 )
}
ObjectiveFunctionWeights {
  %Alive ( 0.600000 )
  E(TS) ( 0.200000 )
  Improvement(TS) ( 0.000000 )
  E(VS) ( 1.000000 )
  Improvement(VS) ( 0.000000 )
  (E(TS)-E(VS))/max(E(TS),E(VS)) ( 0.000000 )
  LipComplexity ( 0.000000 )
  OptComplexity ( 2.000000 )
  testVal(dead)-testVal(alive) ( 0.000000 )
}
AnySave {
  file_name ( f.GeneticWeightSelect.dat )
}
AnyLoad {
  file_name ( f.GeneticWeightSelect.dat )
}
Eta ( 0.050000 )
DerivEps ( 0.000000 )
BatchSize ( 5 )
#minEpochsForFitnessTest ( 2 )
#maxEpochsForFitnessTest ( 3 )
SelectWeights ( T )
SelectNodes ( T )
maxGrowthOfValError ( 0.005000 )
      }
    }
CCMenu {
  Clusters {
    mlp.input {
      ActFunction {
       sel id
        plogistic {
          parameter ( 0.500000 )
        }
        ptanh {
          parameter ( 0.500000 )
        }
        pid {
          parameter ( 0.500000 )
        }
      }
      InputModification {
       sel None
        AdaptiveUniformNoise {
          NoiseEta ( 1.000000 )
```

```
                DampingFactor { 1.000000 }
              }
              AdaptiveGaussNoise {
                NoiseEta { 1.000000 }
                DampingFactor { 1.000000 }
              }
              FixedUniformNoise {
                SetNoiseLevel {
                  NewNoiseLevel { 1.045229 }
                }
              }
              FixedGaussNoise {
                SetNoiseLevel {
                  NewNoiseLevel { 1.045229 }
                }
              }
            }
            SaveNoiseLevel {
              Filename { noise_level.dat }
            }
            LoadNoiseLevel {
              Filename { noise_level.dat }
            }
            SaveManipulatorData {
              Filename { inputManip.dat }
            }
            LoadManipulatorData {
              Filename { inputManip.dat }
            }
            Norm { NoNorm }
          }
          mlp.excessDemand {
            ActFunction {
              sel id
              plogistic {
                parameter { 0.500000 }
              }
              ptanh {
                parameter { 0.500000 }
              }
              pid {
                parameter { 0.500000 }
              }
            }
          }
          mlp.price {
            ActFunction {
              sel id
              plogistic {
                parameter { 0.500000 }
              }
              ptanh {
                parameter { 0.500000 }
              }
              pid {
                parameter { 0.500000 }
              }
            }
            ErrorFunc {
              sel LnCosh
              |x| {
                parameter { 0.050000 }
              }
              LnCosh {
                parameter { 2.000000 }
              }
            }
            ToleranceFlag { F }
            Tolerance { 0.000000 }
            Weighting { 2.000000 }
          }
          mlp.agents {
            ActFunction {
              sel tanh
              plogistic {
                parameter { 0.500000 }
              }
              ptanh {
```

```
          parameter { 0.500000 }
        }
        pid {
          parameter { 0.500000 }
        }
      }
      ErrorFunc {
       sel ProfMax
        |x| {
          parameter { 0.050000 }
        }
        LnCosh {
          parameter { 2.000000 }
        }
      }
      Norm { NoNorm }
      ToleranceFlag { F }
      Tolerance { 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 }
      Weighting { 0.100000 0.100000 0.100000 0.100000 0.100000 0.100000 0.100000 0.100000
0.100000 0.100000 0.100000 0.100000 0.100000 0.100000 0.100000 0.100000 0.100000 0.100000
0.100000 0.100000 0.100000 0.100000 0.100000 0.100000 0.100000 0.100000 0.100000 0.100000
0.100000 0.100000 0.100000 0.100000 0.100000 0.100000 0.100000 0.100000 0.100000 0.100000
0.100000 0.100000 0.100000 0.100000 0.100000 0.100000 0.100000 0.100000 0.100000 0.100000
0.100000 0.100000 0.100000 0.100000 0.100000 0.100000 0.100000 0.100000 0.100000 0.100000
0.100000 0.100000 0.100000 0.100000 0.100000 0.100000 0.100000 0.100000 0.100000 0.100000
0.100000 0.100000 0.100000 0.100000 0.100000 0.100000 0.100000 0.100000 0.100000 0.100000
0.100000 0.100000 0.100000 0.100000 0.100000 0.100000 0.100000 0.100000 0.100000 0.100000
0.100000 0.100000 0.100000 0.100000 0.100000 0.100000 0.100000 0.100000 0.100000 0.100000
0.100000 0.100000 0.100000 0.100000 0.100000 0.100000 0.100000 0.100000 0.100000 0.100000
0.100000 0.100000 0.100000 0.100000 0.100000 0.100000 0.100000 0.100000 0.100000 0.100000
0.100000 0.100000 0.100000 0.100000 0.100000 0.100000 0.100000 0.100000 0.100000 0.100000
0.100000 0.100000 0.100000 0.100000 0.100000 0.100000 0.100000 0.100000 0.100000 0.100000
0.100000 0.100000 0.100000 0.100000 0.100000 0.100000 0.100000 0.100000 0.100000 0.100000
0.100000 0.100000 0.100000 0.100000 0.100000 0.100000 0.100000 0.100000 0.100000 0.100000
0.100000 0.100000 0.100000 0.100000 0.100000 0.100000 0.100000 0.100000 0.100000 0.100000
0.100000 0.100000 0.100000 0.100000 0.100000 0.100000 0.100000 0.100000 0.100000 0.100000
0.100000 0.100000 }
        }
      }
      Connectors {
        mlp.agents->excessDemand {
          WeightWatcher {
            Active { T }
            MaxWeight { 1.000000 }
            MinWeight { 1.000000 }
          }
          LoadWeightsLocal {
            Filename { std }
          }
          SaveWeightsLocal {
            Filename { std }
          }
          Alive { T }
          WtFreeze { F }
          AllowGeneticOptimization { F }
          Penalty { NoPenalty }
```

```
                    AllowPruning { F }
                    EtaModifier { 1.000000 }
                 }
              mlp.excessDemand->price {
                 WeightWatcher {
                    Active { T }
                    MaxWeight { 2.000000 }
                    MinWeight { 0.010000 }
                 }
                 LoadWeightsLocal {
                    Filename { std }
                 }
                 SaveWeightsLocal {
                    Filename { std }
                 }
                 Alive { T }
                 WtFreeze { F }
                 AllowGeneticOptimization { F }
                 Penalty { NoPenalty }
                 AllowPruning { F }
                 EtaModifier { 1.000000 }
              }
              mlp.input->agents {
                 WeightWatcher {
                    Active { F }
                    MaxWeight { 1.000000 }
                    MinWeight { 0.000000 }
                 }
                 LoadWeightsLocal {
                    Filename { std }
                 }
                 SaveWeightsLocal {
                    Filename { std }
                 }
                 Alive { T }
                 WtFreeze { F }
                 AllowGeneticOptimization { F }
                 Penalty { NoPenalty }
                 AllowPruning { T }
                 EtaModifier { 1.000000 }
              }
              mlp.bias->agents {
                 WeightWatcher {
                    Active { F }
                    MaxWeight { 1.000000 }
                    MinWeight { 0.000000 }
                 }
                 LoadWeightsLocal {
                    Filename { std }
                 }
                 SaveWeightsLocal {
                    Filename { std }
                 }
                 Alive { T }
                 WtFreeze { F }
                 AllowGeneticOptimization { F }
                 Penalty { NoPenalty }
                 AllowPruning { F }
                 EtaModifier { 1.000000 }
              }
           }
           AnySave {
              file_name { f.CCMenu.dat }
           }
           AnyLoad {
              file_name { f.CCMenu.dat }
           }
        }
     TestRun {
        Filename { Test }
        Part.Transformed { F }
     }
     Online {
        Filename { Online.dat }
     }
  }
```

Für die Testphase:

```
BpNet {
  Globals {
    WtPenalty {
     sel NoPenalty
      Weigend {
        Lambda { 0.000000 }
        AutoAdapt { T }
        w0 { 1.000000 }
        DeltaLambda { 0.000001 }
        ReducFac { 0.900000 }
        Gamma { 0.900000 }
        DesiredError { 0.000000 }
      }
      WtDecay {
        Lambda { 0.010000 }
        AutoAdapt { F }
        AdaptTime { 10 }
        EpsObj { 0.001000 }
        ObjSet { Training }
        EpsilonFac { 1.000000 }
      }
      ExtWtDecay {
        Lambda { 0.001000 }
        AutoAdapt { F }
        AdaptTime { 10 }
        EpsObj { 0.001000 }
        ObjSet { Training }
        EpsilonFac { 1.000000 }
      }
      Finnoff {
        AutoAdapt { T }
        Lambda { 0.000000 }
        DeltaLambda { 0.000001 }
        ReducFac { 0.900000 }
        Gamma { 0.900000 }
        DesiredError { 0.000000 }
      }
    }
    ErrorFunc {
     sel LnCosh
      |x| {
        parameter { 0.050000 }
      }
      LnCosh {
        parameter { 2.000000 }
      }
    }
    AnySave {
      file_name { f.Globals.dat }
    }
    AnyLoad {
      file_name { f.Globals.dat }
    }
    ASCII { T }
  }
  LearnCtrl {
   sel Stochastic
    Stochastic {
      PatternSelection {
       sel Permute
        SubSample {
          Percent { 0.500000 }
        }
        ExpRandom {
          Lambda { 2.000000 }
        }
      }
      WtPruneCtrl {
        PruneSchedule {
         sel FixSchedule
          FixSchedule {
            Limit_0 { 10 }
```

```
                Limit_1 { 10 }
                Limit_2 { 10 }
                Limit_3 { 10 }
                RepeatLast { T }
              }
            DynSchedule {
              MaxLength { 4 }
              MinimumRuns { 0 }
              Training { F }
              Validation { T }
              Generalization { F }
            }
            DivSchedule {
              Divergence { 0.100000 }
              MinEpochs { 5 }
            }
          }
          PruneAlg {
           sel FixPrune
            FixPrune {
              Perc_0 { 0.100000 }
              Perc_1 { 0.100000 }
              Perc_2 { 0.100000 }
              Perc_3 { 0.100000 }
            }
            EpsiPrune {
              DeltaEps { 0.050000 }
              StartEps { 0.050000 }
              MaxEps { 1.000000 }
              ReuseEps { F }
            }
          }
          Tracer {
            Active { F }
            Set { Validation }
            File { trace }
          }
          Active { F }
          Randomize { 0.000000 }
          PruningSet { Train.+Valid. }
          Method { S-Pruning }
        }
        StopControl {
          EpochLimit {
            Active { F }
            MaxEpoch { 60 }
          }
          MovingExpAverage {
            Active { F }
            MaxLength { 4 }
            Training { F }
            Validation { T }
            Generalization { F }
            Decay { 0.900000 }
          }
          CheckObjectiveFct {
            Active { F }
            MaxLength { 4 }
            Training { F }
            Validation { T }
            Generalization { F }
          }
          CheckDelta {
            Active { F }
            Divergence { 0.100000 }
          }
        }
        EtaCtrl {
          Mode {
            sel EtaSchedule
            EtaSchedule {
              SwitchTime { 10 }
              ReductFactor { 0.950000 }
            }
            FuzzCtrl {
              MaxDeltaObj { 0.300000 }
              MaxDelta2Obj { 0.300000 }
              MaxEtaChange { 0.020000 }
```

```
              MinEta { 0.001000 }
              MaxEta { 0.100000 }
              Smoother { 1.000000 }
            }
          }
         Active { F }
        }
      LearnAlgo {
       sel VarioEta
         VarioEta {
           MinCalls { 50 }
         }
         MomentumBackProp {
           Alpha { 0.050000 }
         }
         Quickprop {
           Decay { 0.050000 }
           Mu { 2.000000 }
         }
       }
      AnySave {
        file_name { f.Stochastic.dat }
      }
      AnyLoad {
        file_name { f.Stochastic.dat }
      }
      BatchSize { 10 }
      Eta { 0.010000 }
      DerivEps { 0.010000 }
    }
   TrueBatch {
     PatternSelection {
      sel Sequential
        SubSample {
          Percent { 0.500000 }
        }
        ExpRandom {
          Lambda { 2.000000 }
        }
      }
      WtPruneCtrl {
        Tracer {
          Active { F }
          Set { Validation }
          File { trace }
        }
        Active { F }
        Randomize { 0.000000 }
        PruningSet { Train.+Valid. }
        Method { S-Pruning }
      }
      EtaCtrl {
        Active { F }
      }
      LearnAlgo {
       sel VarioEta
         VarioEta {
           MinCalls { 200 }
         }
         MomentumBackProp {
           Alpha { 0.050000 }
         }
         Quickprop {
           Decay { 0.050000 }
           Mu { 2.000000 }
         }
       }
      AnySave {
        file_name { f.TrueBatch.dat }
      }
      AnyLoad {
        file_name { f.TrueBatch.dat }
      }
      Eta { 0.050000 }
      DerivEps { 0.010000 }
    }
   LineSearch {
     PatternSelection {
```

```
sel Sequential
  SubSample {
    Percent { 0.500000 }
  }
  ExpRandom {
    Lambda { 2.000000 }
  }
}
WtPruneCtrl {
  Tracer {
    Active { F }
    Set { Validation }
    File { trace }
  }
  Active { F }
  Randomize { 0.000000 }
  PruningSet { Train.+Valid. }
  Method { S-Pruning }
}
LearnAlgo {
 sel ConjGradient
  VarioEta {
    MinCalls { 200 }
  }
  MomentumBackProp {
    Alpha { 0.050000 }
  }
  Quickprop {
    Decay { 0.050000 }
    Mu { 2.000000 }
  }
  Low-Memory-BFGS {
    Limit { 2 }
  }
}
AnySave {
  file_name { f.LineSearch.dat }
}
AnyLoad {
  file_name { f.LineSearch.dat }
}
EtaNull { 1.000000 }
MaxSteps { 10 }
LS_Precision { 0.500000 }
TrustRegion { T }
DerivEps { 0.010000 }
BatchSize { 2147483647 }
}
GeneticWeightSelect {
  PatternSelection {
   sel Sequential
    SubSample {
      Percent { 0.500000 }
    }
    ExpRandom {
      Lambda { 2.000000 }
    }
  }
  LearnAlgo {
   sel VarioEta
    VarioEta {
      MinCalls { 200 }
    }
    MomentumBackProp {
      Alpha { 0.050000 }
    }
  }
  ObjFctTracer {
    Active { F }
    File { objFunc }
  }
  SearchControl {
    SearchStrategy {
     sel HillClimberControl
      HillClimberControl {
        %InitialAlive { 0.950000 }
        InheritWeights { T }
        Beta { 0.100000 }
```

```
                MutationType { DistributedMacroMutation }
                MaxTrials { 50 }
              }
              PBILControl {
                %InitialAlive { 0.950000 }
                InheritWeights { T }
                Beta { 0.100000 }
                Alpha { 0.100000 }
                PopulationSize { 40 }
              }
              PopulationControl {
                pCrossover { 1.000000 }
                CrossoverType { SimpleCrossover }
                Scaling { T }
                ScalingFactor { 2.000000 }
                Sharing { T }
                SharingFactor { 0.050000 }
                PopulationSize { 50 }
                min.%InitialAlive { 0.010000 }
                max.%InitialAlive { 0.100000 }
              }
            }
            pMutation { 0.000000 }
          }
          ObjectiveFunctionWeights {
            %Alive { 0.600000 }
            E(TS) { 0.200000 }
            Improvement(TS) { 0.000000 }
            E(VS) { 1.000000 }
            Improvement(VS) { 0.000000 }
            (E(TS)-E(VS))/max(E(TS),E(VS)) { 0.000000 }
            LipComplexity { 0.000000 }
            OptComplexity { 2.000000 }
            testVal(dead)-testVal(alive) { 0.000000 }
          }
          AnySave {
            file_name { f.GeneticWeightSelect.dat }
          }
          AnyLoad {
            file_name { f.GeneticWeightSelect.dat }
          }
          Eta { 0.050000 }
          DerivEps { 0.010000 }
          BatchSize { 5 }
          #minEpochsForFitnessTest { 2 }
          #maxEpochsForFitnessTest { 3 }
          SelectWeights { T }
          SelectNodes { T }
          maxGrowthOfValError { 0.005000 }
        }
      }
      CCMenu {
        Clusters {
          mlp.inputP1 {
            ActFunction {
              sel id
              plogistic {
                parameter { 0.500000 }
              }
              ptanh {
                parameter { 0.500000 }
              }
              pid {
                parameter { 0.500000 }
              }
            }
            InputModification {
              sel None
              AdaptiveUniformNoise {
                NoiseEta { 1.000000 }
                DampingFactor { 1.000000 }
              }
              AdaptiveGaussNoise {
                NoiseEta { 1.000000 }
                DampingFactor { 1.000000 }
              }
              FixedUniformNoise {
                SetNoiseLevel {
```

```
                NewNoiseLevel { 0.000000 }
              }
            }
            FixedGaussNoise {
              SetNoiseLevel {
                NewNoiseLevel { 0.000000 }
              }
            }
          }
          SaveNoiseLevel {
            Filename { noise_level.dat }
          }
          LoadNoiseLevel {
            Filename { noise_level.dat }
          }
          SaveManipulatorData {
            Filename { inputManip.dat }
          }
          LoadManipulatorData {
            Filename { inputManip.dat }
          }
          Norm { NoNorm }
        }
        mlp.input {
          ActFunction {
           sel id
            plogistic {
              parameter { 0.500000 }
            }
            ptanh {
              parameter { 0.500000 }
            }
            pid {
              parameter { 0.500000 }
            }
          }
          InputModification {
           sel None
            AdaptiveUniformNoise {
              NoiseEta { 1.000000 }
              DampingFactor { 1.000000 }
            }
            AdaptiveGaussNoise {
              NoiseEta { 1.000000 }
              DampingFactor { 1.000000 }
            }
            FixedUniformNoise {
              SetNoiseLevel {
                NewNoiseLevel { 0.000000 }
              }
            }
            FixedGaussNoise {
              SetNoiseLevel {
                NewNoiseLevel { 0.000000 }
              }
            }
          }
          SaveNoiseLevel {
            Filename { noise_level.dat }
          }
          LoadNoiseLevel {
            Filename { noise_level.dat }
          }
          SaveManipulatorData {
            Filename { inputManip.dat }
          }
          LoadManipulatorData {
            Filename { inputManip.dat }
          }
          Norm { NoNorm }
        }
        mlp.agentsP1 {
          ActFunction {
           sel id
            plogistic {
              parameter { 0.500000 }
            }
            ptanh {
```

```
            parameter ( 0.500000 )
          }
        pid {
          parameter ( 0.500000 )
        }
      }
    ErrorFunc {
     sel none
      |x| {
          parameter ( 0.050000 )
      }
      LnCosh {
          parameter ( 2.000000 )
      }
    }
    Norm ( NoNorm )
    ToleranceFlag ( F )
    Tolerance ( 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 }
    Weighting ( 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 }
      }
    mlp.agents {
      ActFunction {
        sel tanh
        plogistic {
          parameter ( 0.500000 )
        }
        ptanh {
          parameter ( 0.500000 )
        }
        pid {
          parameter ( 0.500000 )
        }
      }
    ErrorFunc {
     sel ProfMax
      |x| {
          parameter ( 0.050000 )
      }
```

```
        LnCosh {
          parameter { 2.000000 }
        }
      }
      Norm { NoNorm }
      ToleranceFlag { F }
      Tolerance { 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 }
      Weighting { 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 }
      }
    mlp.excessDemand {
      ActFunction {
      sel id
       plogistic {
         parameter { 0.500000 }
       }
       ptanh {
         parameter { 0.500000 }
       }
       pid {
         parameter { 0.500000 }
       }
      }
    }
    mlp.price {
      ActFunction {
      sel id
       plogistic {
         parameter { 0.500000 }
       }
       ptanh {
         parameter { 0.500000 }
       }
       pid {
         parameter { 0.500000 }
       }
      }
      ErrorFunc {
      sel LnCosh
```

```
        |x| {
          parameter { 0.050000 }
        }
        LnCosh {
          parameter { 2.000000 }
        }
      }
      ToleranceFlag { F }
      Tolerance { 0.000000 }
      Weighting { 1.000000 }
    }
  }
Connectors {
  mlp.inputP1->agentsP1 {
    WeightWatcher {
      Active { F }
      MaxWeight { 1.000000 }
      MinWeight { 0.000000 }
    }
    LoadWeightsLocal {
      Filename { std }
    }
    SaveWeightsLocal {
      Filename { std }
    }
    Alive { T }
    WtFreeze { F } `
    AllowPruning { T }
    EtaModifier { 1.000000 }
    Penalty { NoPenalty }
  }
  mlp.bias->agentsP1 {
    WeightWatcher {
      Active { F }
      MaxWeight { 1.000000 }
      MinWeight { 0.000000 }
    }
    LoadWeightsLocal {
      Filename { std }
    }
    SaveWeightsLocal {
      Filename { std }
    }
    Alive { T }
    WtFreeze { F }
    AllowPruning { F }
    EtaModifier { 1.000000 }
    Penalty { NoPenalty }
  }
  mlp.input->agents {
    LoadWeightsLocal {
      Filename { std }
    }
    SaveWeightsLocal {
      Filename { std }
    }
    Alive { T }
    WtFreeze { F }
    AllowPruning { T }
    EtaModifier { 1.000000 }
    Penalty { NoPenalty }
  }
  mlp.bias->agents {
    LoadWeightsLocal {
      Filename { std }
    }
    SaveWeightsLocal {
      Filename { std }
    }
    Alive { T }
    WtFreeze { F }
    AllowPruning { F }
    EtaModifier { 1.000000 }
    Penalty { NoPenalty }
  }
  mlp.agentsP1->agents {
    WeightWatcher {
      Active { F }
```

```
                          MaxWeight ( 1.000000 )
                          MinWeight ( 0.000000 )
                        }
                        LoadWeightsLocal {
                          Filename ( std )       .
                        }
                        SaveWeightsLocal {
                          Filename ( std )
                        }
                        Alive ( T )
                        WtFreeze ( F )
                        AllowPruning ( F )
                        Penalty ( NoPenalty )
                        EtaModifier ( 1.000000 )
                      }
                      mlp.agents->excessDemand {
                        WeightWatcher {
                          Active ( T )
                          MaxWeight ( 1.000000 )
                          MinWeight ( 1.000000 )
                        }
                        LoadWeightsLocal {
                          Filename ( std )
                        }
                        SaveWeightsLocal {
                          Filename ( std )
                        }
                        Alive ( T )
                        WtFreeze ( T )
                        AllowPruning ( F )
                        Penalty ( NoPenalty )
                        EtaModifier ( 1.000000 )
                      }
                      mlp.excessDemand->price {
                        WeightWatcher {
                          Active ( T )
                          MaxWeight ( 2.000000 )
                          MinWeight ( 0.010000 )
                        }
                        LoadWeightsLocal {
                          Filename ( std )
                        }
                        SaveWeightsLocal {
                          Filename ( std )
                        }
                        Alive ( T )
                        WtFreeze ( F )
                        AllowPruning ( F )
                        Penalty ( NoPenalty )
                        EtaModifier ( 1.000000 )
                      }
                    }
                  AnySave {
                    file_name ( f.CCMenu.dat )
                  }
                  AnyLoad {
                    file_name ( f.CCMenu.dat )
                  }
                }
              TestRun {
                Filename ( Test )
                Part.Transformed ( F )
              }
              Online {
                Filename ( Online.dat )
              }

            }
```

**2. Spezifikations-Datei:**

```
APPLICATION Dollar_Prognose_Grimmdaten
MODE DAY WEEK 5
```

```
FROM 01.01.1991 TO MAX

TRAINING FROM 01.01.1991 TO 03.09.1996

VALIDATION FROM 03.09.1995 TO 03.09.1996
// VALIDATION RANDOM 0%


INPUT CLUSTER mlp.inputP1

  BEGIN   DEMUSD "DMARKER/USDOLLR"
    x = FILE data/dol.txt COLUMN 1

    INPUT = scale((x - x(-1)) / x(-1))
            LAG -1
    INPUT = scale((x - 2 * x(-1) + x(-2)) / x)
            LAG -1
  END


  BEGIN   JPYUSD "JAPAYEN/USDOLLR"
    x = FILE data/dol.txt COLUMN 2

    INPUT = scale((x - x(-1)) / x(-1))
            LAG -1
    INPUT = scale((x - 2 * x(-1) + x(-2)) / x)
            LAG -1
  END


  BEGIN   ECUS3M "EURO-CURRENCY (LDN) US$ 3 MONTHS - MIDDLE RATE"
    x = FILE data/dol.txt COLUMN 3

    INPUT = scale((x - x(-1)) / x(-1))
            LAG -1
    INPUT = scale((x - 2 * x(-1) + x(-2)) / x)
            LAG -1
  END


  BEGIN   ECWGM3M "EURO-CURRENCY (LDN) D-MARK 3 MONTHS - MIDDLE RATE"
    x = FILE data/dol.txt COLUMN 4

    INPUT = scale((x - x(-1)) / x(-1))
            LAG -1
    INPUT = scale((x - 2 * x(-1) + x(-2)) / x)
            LAG -1
  END


  BEGIN   AUSGVG4RY "US TOTAL 7-10 YEARS DS GOVT. INDEX - RED. YIELD"
    x = FILE data/dol.txt COLUMN 5

    INPUT = scale((x - x(-1)) / x(-1))
            LAG -1
    INPUT = scale((x - 2 * x(-1) + x(-2)) / x)
            LAG -1
  END


  BEGIN   ABDGVG4RY "BD TOTAL 7-10 YEARS DS GOVT. INDEX - RED. YIELD"
    x = FILE data/dol.txt COLUMN 6

    INPUT = scale((x - x(-1)) / x(-1))
            LAG -1
    INPUT = scale((x - 2 * x(-1) + x(-2)) / x)
            LAG -1
  END


  BEGIN   AJPGVG4RY "JP TOTAL 7-10 YEARS DS GOVT. INDEX - RED. YIELD"
    x = FILE data/dol.txt COLUMN 7

    INPUT = scale((x - x(-1)) / x(-1))
            LAG -1
    INPUT = scale((x - 2 * x(-1) + x(-2)) / x)
            LAG -1
```

```
END


BEGIN   TOTMKUSRI "US-DS MARKET - TOT RETURN IND"
    x = FILE data/dol.txt COLUMN 8

    INPUT = scale((x - x(-1)) / x(-1))
            LAG -1
    INPUT = scale((x - 2 * x(-1) + x(-2)) / x)
            LAG -1
END


BEGIN   TOTMKBDRI "GERMANY-DS MARKET - TOT RETURN IND"
    x = FILE data/dol.txt COLUMN 9

    INPUT = scale((x - x(-1)) / x(-1))
            LAG -1
    INPUT = scale((x - 2 * x(-1) + x(-2)) / x)
            LAG -1
END


BEGIN   NYFECRB "COMMODITY RESEARCH BUREAU INDEX-CRB - PRICE INDEX"
    x = FILE data/dol.txt COLUMN 10

    INPUT = scale((x - x(-1)) / x(-1))
            LAG -1
    INPUT = scale((x - 2 * x(-1) + x(-2)) / x)
            LAG -1
END


BEGIN   GOLDBLN "GOLD BULLION $/TROY OUNCE"
    x = FILE data/dol.txt COLUMN 11

    INPUT = scale((x - x(-1)) / x(-1))
            LAG -1
    INPUT = scale((x - 2 * x(-1) + x(-2)) / x)
            LAG -1
END



INPUT CLUSTER mlp.input
    BEGIN   DEMUSD "DMARKER/USDOLLR"
        x = FILE data/dol.txt COLUMN 1

    INPUT = scale((x - x(-1)) / x(-1))

    INPUT = scale((x - 2 * x(-1) + x(-2)) / x)
    END


    BEGIN   JPYUSD "JAPAYEN/USDOLLR"
        x = FILE data/dol.txt COLUMN 2

    INPUT = scale((x - x(-1)) / x(-1))

    INPUT = scale((x - 2 * x(-1) + x(-2)) / x)
    END


    BEGIN   ECUS3M "EURO-CURRENCY (LDN) US$ 3 MONTHS - MIDDLE RATE"
        x = FILE data/dol.txt COLUMN 3

    INPUT = scale((x - x(-1)) / x(-1))

    INPUT = scale((x - 2 * x(-i) + x(-2)) / x)
    END


    BEGIN   ECWGM3M "EURO-CURRENCY (LDN) D-MARK 3 MONTHS - MIDDLE RATE"
     x = FILE data/dol.txt COLUMN 4

    INPUT = scale((x - x(-1)) / x(-1))
```

```
          INPUT = scale((x - 2 * x(-1) + x(-2)) / x)
     END


BEGIN   AUSGVG4RY "US TOTAL 7-10 YEARS DS GOVT. INDEX - RED. YIELD"
     x = FILE data/dol.txt COLUMN 5

     INPUT = scale((x - x(-1)) / x(-1))

     INPUT = scale((x - 2 * x(-1) + x(-2)) / x)
END


BEGIN   ABDGVG4RY "BD TOTAL 7-10 YEARS DS GOVT. INDEX - RED. YIELD"
     x = FILE data/dol.txt COLUMN 6

     INPUT = scale((x - x(-1)) / x(-1))

     INPUT = scale((x - 2 * x(-1) + x(-2)) / x)
END


BEGIN   AJPGVG4RY "JP TOTAL 7-10 YEARS DS GOVT. INDEX - RED. YIELD"
     x = FILE data/dol.txt COLUMN 7

     INPUT = scale((x - x(-1)) / x(-1))

     INPUT = scale((x - 2 * x(-1) + x(-2)) / x)
END


BEGIN   TOTMKUSRI "US-DS MARKET - TOT RETURN IND"
     x = FILE data/dol.txt COLUMN 8

     INPUT = scale((x - x(-1)) / x(-1))

     INPUT = scale((x - 2 * x(-1) + x(-2)) / x)
END


BEGIN   TOTMKBDRI "GERMANY-DS MARKET - TOT RETURN IND"
     x = FILE data/dol.txt COLUMN 9

     INPUT = scale((x - x(-1)) / x(-1))

     INPUT = scale((x - 2 * x(-1) + x(-2)) / x)
END


BEGIN   NYFECRB "COMMODITY RESEARCH BUREAU INDEX-CRB - PRICE INDEX"
     x = FILE data/dol.txt COLUMN 10

     INPUT = scale((x - x(-1)) / x(-1))

     INPUT = scale((x - 2 * x(-1) + x(-2)) / x)
END


BEGIN   GOLDBLN "GOLD BULLION $/TROY OUNCE"
     x = FILE data/dol.txt COLUMN 11

     INPUT = scale((x - x(-1)) / x(-1))

     INPUT = scale((x - 2 * x(-1) + x(-2)) / x)
END




TARGET CLUSTER mlp.agentsP1

        BEGIN   agents behavior past 1
             x = FILE data/dol.txt COLUMN 1

          TARGET = 100 * ln(x / x(-1))
          TARGET = 100 * ln(x / x(-1))
```

```
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))

TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))

TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))

TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))

TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))

TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))

TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))

TARGET = 100 * ln(x / x(-1))
TARGET = 100 * ln(x / x(-1))
```

```
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))

TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))

TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))


TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))

TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))

TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))

TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
TARGET = 100 * ln(x / x(-1))
```

```
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))


        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))

        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))

        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))

        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))

        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
        TARGET = 100 * ln(x / x(-1))
    END


TARGET CLUSTER mlp.agents

    BEGIN  agents behavior
         x = FILE data/dol.txt COLUMN 1

        TARGET = 100 * ln(x(1) / x)
        TARGET = 100 * ln(x(1) / x)
        TARGET = 100 * ln(x(1) / x)
```

```
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
```

```
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)


TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
```

```
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)


TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
END



TARGET CLUSTER mlp.price

        BEGIN   price
                x = FILE data/dol.txt COLUMN 1

        TARGET = 100 * ln(x(1) / x)
                ASSIGN TO channel
        END
```

```
SIGNAL

        BEGIN hit rate = NORMSUM(signal)
                t =   TARGET channel
                o =   OUTPUT channel

                SIGNAL = IF t * o > 0 THEN 1 ELSE 0
        END


        BEGIN RoI
            y = FILE data/dol.txt COLUMN 1
            o = OUTPUT channel

            SIGNAL = (y(1) / y - 1)  * sign(o)
        END


        BEGIN realized potential = Relsum(signal1, signal2)
                y = FILE data/dol.txt COLUMN 1
                o = OUTPUT channel

            SIGNAL = (y(1) / y - 1)  * sign(o)

                SIGNAL = abs(y(1) / y - 1)
        END


        BEGIN  Backtransformation of forecasts
                y = FILE data/dol.txt COLUMN 1
            o = OUTPUT channel

            SIGNAL = y(1)

            SIGNAL = y * (1 + o / 100)
        END


        BEGIN Buy & Hold
                y = FILE data/dol.txt COLUMN 1

                SIGNAL = y(1) / y - 1
        END


        BEGIN Naiv Prognose
                y = FILE data/dol.txt COLUMN 1

                SIGNAL = (y(1) / y - 1) * sign(y - y(-1))
        END
```

### 3. Modell-Top-Datei:

```
        net {
                cluster INPUT   ( EQUIVALENT, IN  );
                cluster AGENTS  ( EQUIVALENT, OUT );

                connect INPUT_AGENTS ( INPUT -> AGENTS, RANDOM(20));
                connect BIAS_AGENTS  ( bias  -> AGENTS );

                INPUT   inputP1;
                INPUT   input;
                AGENTS agentsP1;
                AGENTS agents;

                cluster ( DIM(1), HID) excessDemand;
                cluster (         OUT) price;

                connect ( inputP1      -> agentsP1, INPUT_AGENTS );
                connect ( bias         -> agentsP1, BIAS_AGENTS  );
                connect ( input        -> agents  , INPUT_AGENTS );
                connect ( bias         -> agents  , BIAS_AGENTS  );
                connect ( agentsP1     -> agents  , DIAGONAL(1.0));
```

```
connect ( agents          -> excessDemand              );
connect ( excessDemand -> price                        );

} mlp;
```

Mögliche Realisierung der Alternative des zweiten Ausführungsbeispiels:

**1. Parameter-Datei:**

```
BpNet {
  Globals {
    WtPenalty {
      sel NoPenalty
      Weigend {
        Lambda { 0.000000 }
        AutoAdapt { T }
        w0 { 1.000000 }
        DeltaLambda { 0.000001 }
        ReducFac { 0.900000 }
        Gamma { 0.900000 }
        DesiredError { 0.000000 }
      }
      WtDecay {
        Lambda { 0.010000 }
        AutoAdapt { F }
        AdaptTime { 10 }
        EpsObj { 0.001000 }
        ObjSet { Training }
        EpsilonFac { 1.000000 }
      }
      ExtWtDecay {
        Lambda { 0.001000 }
        AutoAdapt { F }
        AdaptTime { 10 }
        EpsObj { 0.001000 }
        ObjSet { Training }
        EpsilonFac { 1.000000 }
      }
      Finnoff {
        AutoAdapt { T }
        Lambda { 0.000000 }
        DeltaLambda { 0.000001 }
        ReducFac { 0.900000 }
        Gamma { 0.900000 }
        DesiredError { 0.000000 }
      }
    }
    ErrorFunc {
      sel LnCosh
      |x| {
        parameter { 0.050000 }
      }
      LnCosh {
        parameter { 2.000000 }
      }
    }
    AnySave {
      file_name { f.Globals.dat }
    }
    AnyLoad {
      file_name { f.Globals.dat }
    }
    ASCII { T }
  }
  LearnCtrl {
    sel Stochastic
    Stochastic {
      PatternSelection {
        sel Permute
        SubSample {
          Percent { 0.500000 }
```

```
            }
      ExpRandom {
         Lambda { 2.000000 }
      }
    }
   WtPruneCtrl {
     PruneSchedule {
      sel FixSchedule
        FixSchedule {
          Limit_0 { 10 }
          Limit_1 { 10 }
          Limit_2 { 10 }
          Limit_3 { 10 }
          RepeatLast { T }
        }
        DynSchedule {
          MaxLength { 4 }
          MinimumRuns { 0 }
          Training { F }
          Validation { T }
          Generalization { F }
        }
        DivSchedule {
          Divergence { 0.100000 }
          MinEpochs { 5 }
        }
      }
     PruneAlg {
      sel FixPrune
        FixPrune {
          Perc_0 { 0.100000 }
          Perc_1 { 0.100000 }
          Perc_2 { 0.100000 }
          Perc_3 { 0.100000 }
        }
        EpsiPrune {
          DeltaEps { 0.050000 }
          StartEps { 0.050000 }
          MaxEps { 1.000000 }
          ReuseEps { F }
        }
      }
     Tracer {
       Active { F }
       Set { Validation }
       File { trace }
     }
     Active { F }
     Randomize { 0.000000 }
     PruningSet { Train.+Valid. }
     Method { S-Pruning }
    }
   StopControl {
     EpochLimit {
       Active { F }
       MaxEpoch { 60 }
     }
     MovingExpAverage {
       Active { F }
       MaxLength { 4 }
       Training { F }
       Validation { T }
       Generalization { F }
       Decay { 0.900000 }
     }
     CheckObjectiveFct {
       Active { F }
       MaxLength { 4 }
       Training { F }
       Validation { T }
       Generalization { F }
     }
     CheckDelta {
       Active { F }
       Divergence { 0.100000 }
     }
    }
   EtaCtrl {
```

```
Mode {
  sel EtaSchedule
   EtaSchedule {
     SwitchTime { 10 }
     ReductFactor { 0.950000 }
   }
   FuzzCtrl {
     MaxDeltaObj { 0.300000 }
     MaxDelta2Obj { 0.300000 }
     MaxEtaChange { 0.020000 }
     MinEta { 0.001000 }
     MaxEta { 0.100000 }
     Smoother { 1.000000 }
   }
  }
  Active { F }
 }
 LearnAlgo {
  sel VarioEta
   VarioEta {
     MinCalls { 50 }
   }
   MomentumBackProp {
     Alpha { 0.050000 }
   }
   Quickprop {
     Decay { 0.050000 }
     Mu { 2.000000 }
   }
 }
 AnySave {
   file_name { f.Stochastic.dat }
 }
 AnyLoad {
   file_name { f.Stochastic.dat }
 }
 BatchSize { 10 }
 Eta { 0.010000 }
 DerivEps { 0.000000 }
}
TrueBatch {
  PatternSelection {
   sel Sequential
    SubSample {
      Percent { 0.500000 }
    }
    ExpRandom {
      Lambda { 2.000000 }
    }
  }
  WtPruneCtrl {
    Tracer {
      Active { F }
      Set { Validation }
      File { trace }
    }
    Active { F }
    Randomize { 0.000000 }
    PruningSet { Train.+Valid. }
    Method { S-Pruning }
  }
  EtaCtrl {
    Active { F }
  }
  LearnAlgo {
   sel VarioEta
    VarioEta {
      MinCalls { 200 }
    }
    MomentumBackProp {
      Alpha { 0.050000 }
    }
    Quickprop {
      Decay { 0.050000 }
      Mu { 2.000000 }
    }
  }
  AnySave {
```

```
            file_name { f.TrueBatch.dat }
        }
        AnyLoad {
            file_name { f.TrueBatch.dat }
        }
        Eta { 0.050000 }
        DerivEps { 0.000000 }
    }
    LineSearch {
        PatternSelection {
         sel Sequential
            SubSample {
                Percent { 0.500000 }
            }
            ExpRandom {
                Lambda { 2.000000 }
            }
        }
        WtPruneCtrl {
            Tracer {
                Active { F }
                Set { Validation }
                File { trace }
            }
            Active { F }
            Randomize { 0.000000 }
            PruningSet { Train.+Valid. }
            Method { S-Pruning }
        }
        LearnAlgo {
         sel ConjGradient
            VarioEta {
                MinCalls { 200 }
            }
            MomentumBackProp {
                Alpha { 0.050000 }
            }
            Quickprop {
                Decay { 0.050000 }
                Mu { 2.000000 }
            }
            Low-Memory-BFGS {
                Limit { 2 }
            }
        }
        AnySave {
            file_name { f.LineSearch.dat }
        }
        AnyLoad {
            file_name { f.LineSearch.dat }
        }
        EtaNull { 1.000000 }
        MaxSteps { 10 }
        LS_Precision { 0.500000 }
        TrustRegion { T }
        DerivEps { 0.000000 }
        BatchSize { 2147483647 }
    }
GeneticWeightSelect {
    PatternSelection {
     sel Sequential
        SubSample {
            Percent { 0.500000 }
        }
        ExpRandom {
            Lambda { 2.000000 }
        }
    }
    LearnAlgo {
     sel VarioEta
        VarioEta {
            MinCalls { 200 }
        }
        MomentumBackProp {
            Alpha { 0.050000 }
        }
    }
    ObjFctTracer {
```

```
          Active ( F )
          File ( objFunc )
        }
      SearchControl (
        SearchStrategy (
         sel HillClimberControl
          HillClimberControl (
            %InitialAlive ( 0.950000 )
            InheritWeights ( T )
            Beta ( 0.100000 )
            MutationType ( DistributedMacroMutation )
            MaxTrials ( 50 )
          }
          PBILControl (
            %InitialAlive ( 0.950000 )
            InheritWeights ( T )
            Beta ( 0.100000 )
            Alpha ( 0.100000 )
            PopulationSize ( 40 )
          }
          PopulationControl (
            pCrossover ( 1.000000 )
            CrossoverType ( SimpleCrossover )
            Scaling ( T )
            ScalingFactor ( 2.000000 )
            Sharing ( T )
            SharingFactor ( 0.050000 )
            PopulationSize ( 50 )
            min.%InitialAlive ( 0.010000 )
            max.%InitialAlive ( 0.100000 )
          }
        }
        pMutation ( 0.000000 )
      }
      ObjectiveFunctionWeights (
        %Alive ( 0.600000 )
        E(TS) ( 0.200000 )
        Improvement(TS) ( 0.000000 )
        E(VS) ( 1.000000 )
        Improvement(VS) ( 0.000000 )
        (E(TS)-E(VS))/max(E(TS),E(VS)) ( 0.000000 )
        LipComplexity ( 0.000000 )
        OptComplexity ( 2.000000 )
        testVal(dead)-testVal(alive) ( 0.000000 )
      }
      AnySave (
        file_name ( f.GeneticWeightSelect.dat )
      }
      AnyLoad (
        file_name ( f.GeneticWeightSelect.dat )
      }
      Eta ( 0.050000 )
      DerivEps ( 0.000000 )
      BatchSize ( 5 )
      #minEpochsForFitnessTest ( 2 )
      #maxEpochsForFitnessTest ( 3 )
      SelectWeights ( T )
      SelectNodes ( T )
      maxGrowthOfValError ( 0.005000 )
    }
  }
  CCMenu (
    Clusters (
      mlp.priceInput (
        ActFunction (
         sel id
          plogistic (
            parameter ( 0.500000 )
          }
          ptanh (
            parameter ( 0.500000 )
          }
          pid (
            parameter ( 0.500000 )
          }
        }
        InputModification (
         sel None
```

```
           AdaptiveUniformNoise {
             NoiseEta { 1.000000 }
             DampingFactor { 1.000000 }
           }
           AdaptiveGaussNoise {
             NoiseEta { 1.000000 }
             DampingFactor { 1.000000 }
           }
           FixedUniformNoise {
             SetNoiseLevel {
               NewNoiseLevel { 1.045229 }
             }
           }
           FixedGaussNoise {
             SetNoiseLevel {
               NewNoiseLevel { 1.045229 }
             }
           }
         }
       SaveNoiseLevel {
         Filename { noise_level.dat }
       }
       LoadNoiseLevel {
         Filename { noise_level.dat }
       }
       SaveManipulatorData {
         Filename { inputManip.dat }
       }
       LoadManipulatorData {
         Filename { inputManip.dat }
       }
     }
   }
   mlp.input {
     ActFunction {
      sel id
       plogistic {
         parameter { 0.500000 }
       }
       ptanh {
         parameter { 0.500000 }
       }
       pid {
         parameter { 0.500000 }
       }
     }
     InputModification {
      sel None
       AdaptiveUniformNoise {
         NoiseEta { 1.000000 }
         DampingFactor { 1.000000 }
       }
       AdaptiveGaussNoise {
         NoiseEta { 1.000000 }
         DampingFactor { 1.000000 }
       }
       FixedUniformNoise {
         SetNoiseLevel {
           NewNoiseLevel { 1.045229 }
         }
       }
       FixedGaussNoise {
         SetNoiseLevel {
           NewNoiseLevel { 1.045229 }
         }
       }
     }
     SaveNoiseLevel {
       Filename { noise_level.dat }
     }
     LoadNoiseLevel {
       Filename { noise_level.dat }
     }
     SaveManipulatorData {
       Filename { inputManip.dat }
     }
     LoadManipulatorData {
       Filename { inputManip.dat }
     }
```

```
            Norm { NoNorm }
          }
          mlp.excessDemand {
            ActFunction {
             sel id
              plogistic {
                parameter { 0.500000 }
              }
              ptanh {
                parameter { 0.500000 }
              }
              pid {
                parameter { 0.500000 }
              }
            }
            ErrorFunc {
             sel |x|
              |x| {
                parameter { 0.050000 }
              }
              LnCosh {
                parameter { 2.000000 }
              }
            }
            ToleranceFlag { F }
            Tolerance { 0.000000 }
            Weighting { 30.000000 }
          }
          mlp.agents {
            ActFunction {
             sel tanh
              plogistic {
                parameter { 0.500000 }
              }
              ptanh {
                parameter { 0.500000 }
              }
              pid {
                parameter { 0.500000 }
              }
            }
            ErrorFunc {
             sel ProfMax
              |x| {
                parameter { 0.050000 }
              }
              LnCosh {
                parameter { 2.000000 }
              }
            }
            Norm { NoNorm }
            ToleranceFlag { F }
            Tolerance { 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 0.000000 0.000000 0.000000 0.000000 0.000000 0.000000 0.000000 0.000000
0.000000 0.000000 }
            Weighting { 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
```

45

```
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 1.000000 1.000000 1.000000 1.000000 1.000000 1.000000 1.000000 1.000000
1.000000 1.000000 }
    }
        mlp.priceOutput {
          ActFunction {
           sel id
            plogistic {
              parameter { 0.500000 }
            }
            ptanh {
              parameter { 0.500000 }
            }
            pid {
              parameter { 0.500000 }
            }
          }
          ErrorFunc {
           sel none
            |x| {
              parameter { 0.050000 }
            }
            LnCosh {
              parameter { 2.000000 }
            }
          }
          ToleranceFlag { F }
          Tolerance { 0.000000 }
          Weighting { 1.000000 }
        )
    }
        Connectors {
          mlp.agents->excessDemand {
            WeightWatcher {
              Active { T }
              MaxWeight { 1.000000 }
              MinWeight { 1.000000 }
            }
            LoadWeightsLocal {
              Filename { std }
            }
            SaveWeightsLocal {
              Filename { std }
            }
            Alive { T }
            WtFreeze { T }
            AllowGeneticOptimization { F }
            Penalty { NoPenalty }
            AllowPruning { F }
            EtaModifier { 1.000000 }
          }
          mlp.priceOutput->agents {
            WeightWatcher {
              Active { T }
              MaxWeight { -0.001000 }
              MinWeight { -2.000000 }
            }
            LoadWeightsLocal {
              Filename { std }
            }
            SaveWeightsLocal {
              Filename { std }
            }
            Alive { T }
            WtFreeze { F }
```

```
      AllowGeneticOptimization { F }
      Penalty { NoPenalty }
      AllowPruning { F }
      EtaModifier { 1.000000 }
    }
  mlp.input->agents {
    WeightWatcher {
      Active { F }
      MaxWeight { 1.000000 }
      MinWeight { 0.000000 }
    }
    LoadWeightsLocal {
      Filename { std }
    }
    SaveWeightsLocal {
      Filename { std }
    }
    Alive { T }
    WtFreeze { F }
    AllowGeneticOptimization { F }
    Penalty { NoPenalty }
    AllowPruning { T }
    EtaModifier { 1.000000 }
  }
  mlp.bias->agents {
    WeightWatcher {
      Active { F }
      MaxWeight { 1.000000 }
      MinWeight { 0.000000 }
    }
    LoadWeightsLocal {
      Filename { std }
    }
    SaveWeightsLocal {
      Filename { std }
    }
    Alive { T }
    WtFreeze { F }
    AllowGeneticOptimization { F }
    Penalty { NoPenalty }
    AllowPruning { F }
    EtaModifier { 1.000000 }
  }
  mlp.priceInput->priceOutput {
    WeightWatcher {
      Active { F }
      MaxWeight { 1.000000 }
      MinWeight { 0.000000 }
    }
    LoadWeightsLocal {
      Filename { std }
    }
    SaveWeightsLocal {
      Filename { std }
    }
    Alive { T }
    WtFreeze { T }
    AllowGeneticOptimization { F }
    Penalty { NoPenalty }
    AllowPruning { F }
    EtaModifier { 1.000000 }
  }
  mlp.excessDemand->priceOutput {
    WeightWatcher {
      Active { T }
      MaxWeight { -0.010000 }
      MinWeight { -0.010000 }
    }
    LoadWeightsLocal {
      Filename { std }
    }
    SaveWeightsLocal {
      Filename { std }
    }
    Alive { F }
    WtFreeze { T }
    AllowGeneticOptimization { F }
    Penalty { NoPenalty }
```

```
                          AllowPruning ( F )
                          EtaModifier ( 1.000000 )
                        }
                      mlp.priceOutput->priceOutput {
                        WeightWatcher {
                          Active ( F )
                          MaxWeight ( 1.000000 )
                          MinWeight ( 0.000000 )
                        }
                        LoadWeightsLocal {
                          Filename ( std )
                        }
                        SaveWeightsLocal {
                          Filename ( std )
                        }
                        Alive ( F )
                        WtFreeze ( T )
                        AllowGeneticOptimization ( F )
                        Penalty ( NoPenalty )
                        AllowPruning ( F )
                        EtaModifier ( 1.000000 )
                      }
                    }
                    AnySave {
                      file_name ( f.CCMenu.dat )
                    }
                    AnyLoad {
                      file_name ( f.CCMenu.dat )
                    }
                  }
                  RecPar {
                    decay_c ( 1.000000 )
                    delta_t ( 1.000000 )
                    epsilon ( 0.001000 )
                    max_iter ( 30 )
                    show ( T )
                    Reset_Errors ( T )
                  }
                  TestRun {
                    Filename ( Test )
                    Part.Transformed ( F )
                  }
                  Online {
                    Filename ( Online.dat )
                  }

                }
```

2. Spezifikations-Datei:

```
APPLICATION Prognose
_____

MODE DAY WEEK 5

FROM 01.01.1991 TO MAX

TRAINING FROM 01.01.1991 TO 03.09.1996

VALIDATION FROM 03.09.1995 TO 03.09.1996


INPUT

  BEGIN  DEMUSD "DMARKER/USDOLLR"
      x = FILE data/dol.txt COLUMN 1

      INPUT = scale((x - x(-1)) / x(-1))

      INPUT = scale((x - 2 * x(-1) + x(-2)) / x)
  END
```

```
BEGIN   JPYUSD "JAPAYEN/USDOLLR"
   x = FILE data/dol.txt COLUMN 2

   INPUT = scale((x - x(-1)) / x(-1))

   INPUT = scale((x - 2 * x(-1) + x(-2)) / x)
END


BEGIN   ECUS3M "EURO-CURRENCY (LDN) US$ 3 MONTHS - MIDDLE RATE"
   x = FILE data/dol.txt COLUMN 3

   INPUT = scale((x - x(-1)) / x(-1))

   INPUT = scale((x - 2 * x(-1) + x(-2)) / x)
END


BEGIN   ECWGM3M "EURO-CURRENCY (LDN) D-MARK 3 MONTHS - MIDDLE RATE"
   x = FILE data/dol.txt COLUMN 4

   INPUT = scale((x - x(-1)) / x(-1))

   INPUT = scale((x - 2 * x(-1) + x(-2)) / x)
END


BEGIN   AUSGVG4RY "US TOTAL 7-10 YEARS DS GOVT. INDEX - RED. YIELD"
   x = FILE data/dol.txt COLUMN 5

   INPUT = scale((x - x(-1)) / x(-1))

   INPUT = scale((x - 2 * x(-1) + x(-2)) / x)
END


BEGIN   ABDGVG4RY "BD TOTAL 7-10 YEARS DS GOVT. INDEX - RED. YIELD"
   x = FILE data/dol.txt COLUMN 6

   INPUT = scale((x - x(-1)) / x(-1))

   INPUT = scale((x - 2 * x(-1) + x(-2)) / x)
END


BEGIN   AJPGVG4RY "JP TOTAL 7-10 YEARS DS GOVT. INDEX - RED. YIELD"
   x = FILE data/dol.txt COLUMN 7

   INPUT = scale((x - x(-1)) / x(-1))

   INPUT = scale((x - 2 * x(-1) + x(-2)) / x)
END


BEGIN   TOTMKUSRI "US-DS MARKET - TOT RETURN IND"
   x = FILE data/dol.txt COLUMN 8

   INPUT = scale((x - x(-1)) / x(-1))

   INPUT = scale((x - 2 * x(-1) + x(-2)) / x)
END


BEGIN   TOTMKBDRI "GERMANY-DS MARKET - TOT RETURN IND"
   x = FILE data/dol.txt COLUMN 9

   INPUT = scale((x - x(-1)) / x(-1))

   INPUT = scale((x - 2 * x(-1) + x(-2)) / x)
END


BEGIN   NYFECRB "COMMODITY RESEARCH BUREAU INDEX-CRB - PRICE INDEX"
   x = FILE data/dol.txt COLUMN 10

   INPUT = scale((x - x(-1)) / x(-1))

   INPUT = scale((x - 2 * x(-1) + x(-2)) / x)
```

```
END


BEGIN  GOLDBLN "GOLD BULLION $/TROY OUNCE"
    x = FILE data/dol.txt COLUMN 11

   INPUT = scale((x - x(-1)) / x(-1))

   INPUT = scale((x - 2 * x(-1) + x(-2)) / x)
END



TARGET CLUSTER mlp.excessDemand

    BEGIN  excessDemand

       TARGET = 0
    END


TARGET CLUSTER mlp.agents

    BEGIN  agents behavior
           x = FILE data/dol.txt COLUMN 1

       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)

       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)

       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)

       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)

       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
       TARGET = 100 * ln(x(1) / x)
```

```
TARGET = 100 * ln(x(1) / x)
TARGET = 100 * ln(x(1) / x)
TARGET = 100 * ln(x(1) / x)


TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)


TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
```

```
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
```

```
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)

TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
TARGET = 100 * ln(x(1) / x)
END



TARGET CLUSTER mlp.priceOutput

    BEGIN  price
           x = FILE data/dol.txt COLUMN 1

        TARGET = 100 * ln(x(1) / x)
                 ASSIGN TO channel
    END


SIGNAL

    BEGIN hit rate = NORMSUM(signal)
             t =  TARGET channel
             o =  OUTPUT channel

             SIGNAL = IF t * o > 0 THEN 1 ELSE 0
    END


    BEGIN RoI
       y = FILE data/dol.txt COLUMN 1
       o = OUTPUT channel

       SIGNAL = (y(1) / y - 1)  * sign(o)
    END


    BEGIN realized potential = Relsum(signal1, signal2)
          y = FILE data/dol.txt COLUMN 1
          o = OUTPUT channel

       SIGNAL = (y(1) / y - 1)  * sign(o)

          SIGNAL = abs(y(1) / y - 1)
    END


    BEGIN  Backtransformation of forecasts
          y = FILE data/dol.txt COLUMN 1
       o = OUTPUT channel

       SIGNAL = y(1)

       SIGNAL = y * (1 + o / 100)
    END


    BEGIN Buy & Hold
          y = FILE data/dol.txt COLUMN 1

          SIGNAL = y(1) / y - 1
    END


    BEGIN Naiv Prognose
          y = FILE data/dol.txt COLUMN 1
```

```
                              SIGNAL = (y(1) / y - 1) * sign(y - y(-1))
               END
```

### 3. Modell-Top-Datei:

```
             net {
                    cluster ( IN  ) priceInput;
                    cluster ( IN  ) input;
                    cluster ( OUT ) excessDemand;
                    cluster ( OUT ) agents;
                    cluster ( OUT ) priceOutput;

                    connect ( priceInput    -> priceOutput, 1TO1 );
                    connect ( priceOutput   -> agents               );
                    connect ( input         -> agents, RANDOM(32));
                    connect ( bias          -> agents               );
                    connect ( agents        -> excessDemand         );
                    connect ( excessDemand  -> priceOutput          );
                    connect ( priceOutput   -> priceOutput, 1TO1 );
             } mlp;
```

In diesem Dokument sind folgende Veröffentlichungen zitiert:

[1] S. Haykin, Neural Networks: A Comprehensive Foundation, Mc Millan College Publishing Company, ISBN 0-02-352761-7, S. 498-533, 1994.

[2] A. Zell, Simulation Neuronaler Netze, Addison-Wesley Publishing Company, S.560-561, 1. Auflage, Bonn, 1994

**Patentansprüche**

1. Anordnung zur rechnergestützten Kompensation eines Ungleichgewichtszustands eines ersten technischen Systems,

   - mit einem ersten neuronalen Netz, welches das erste technische System beschreibt;
   - mit einem zweiten neuronalen Netz, welches ein zweites technisches System beschreibt;

   **dadurch gekennzeichnet, dass**

   - das erste und das zweite neuronale Netz derart miteinander verbunden sind, daß ein Ungleichgewichtszustand des ersten technischen Systems durch das zweite neuronale Netz kompensierbar ist.

2. Anordnung nach Anspruch 1,
   bei der das erste neuronale Netz zumindest ein erstes Eingangs-Rechenelement und ein erstes Ausgangs-Rechenelement aufweist.

3. Anordnung nach Anspruch 1 oder 2,
   bei der das zweite neuronale Netz zumindest ein zweites Eingangs-Rechenelement und ein zweites Ausgangs-Rechenelement aufweist.

4. Anordnung nach einem Ansprüche 1 bis 3,
   bei der zumindest ein Teil der Rechenelemente künstliche Neuronen sind.

5. Anordnung nach einem der Ansprüche 1 bis 4,
   bei der mindestens ein Teil von Verbindungen zwischen Rechenelementen variabel ausgestaltet ist.

6. Anordnung nach einem der Ansprüche 1 bis 5,

bei der zumindest Teile der Verbindungen gleiche Gewichtswerte aufweisen.

**7.** Anordnung nach einem der Ansprüche 1 bis 6,
bei der das erste technische System und das zweite technische System jeweils ein Teilsystem eines gemeinsamen Gesamtsystems sind.

**8.** Anordnung nach einem der Ansprüche 1 bis 6,
bei der das erste technische System und das zweite technische System identisch sind.

**9.** Anordnung nach Anspruch 7 oder 8,
eingesetzt zur Ermittlung einer Dynamik eines Systems.

**10.** Anordnung nach einem der Ansprüche 7 bis 9,
eingesetzt zu einer Prognose eines zukünftigen Zustands eines Systems.

**11.** Anordnung nach Anspruch 10,
eingesetzt zu einer Überwachung und/oder Steuerung eines Systems.

**12.** Anordnung nach Anspruch 11,
bei der das System ein chemischer Reaktor ist.

**13.** Verfahren zur rechnergestützten Kompensation eines Ungleichgewichtszustands eines ersten technischen Systems,

- bei dem einem ersten neuronalen Netz, welches das erste technische System beschreibt, eine erste Eingangsgröße zugeführt wird;
- bei dem für die erste Eingangsgröße unter Verwendung des ersten neuronalen Netzes eine erste Ausgangsgröße ermittelt wird,
- bei dem die erste Ausgangsgröße als eine zweite Eingangsgröße einem zweiten neuronalen Netz zugeführt wird, welches ein zweites technisches System beschreibt;
- bei dem für die zweite Eingangsgröße unter Verwendung des zweiten neuronalen Netzes eine zweite Ausgangsgröße, welche einen Zustand des zweiten technischen Systems beschreibt, ermittelt wird,

**dadurch gekennzeichnet, dass**

- die erste Ausgangsgröße einen Ungleichgewichtszustand des ersten technischen Systems beschreibt
- und die zweite Ausgangsgröße derart ermittelt wird, dass der Ungleichgewichtszustand des ersten technischen Systems durch das zweite neuronale Netz kompensiert wird.

**14.** Verfahren nach Anspruch 13,
bei dem des erste technische System und das zweite technische System jeweils ein Teilsystem eines gemeinsamen Gesamtsystems beschreiben.

**15.** Verfahren nach Anspruch 14,
bei dem unter Verwendung des Zustands des zweiten technischen Systems eine Dynamik des Gesamtsystems ermittelt wird.

**16.** Verfahren nach einem der Ansprüche 13 bis 15,
eingesetzt zu einer Prognose eines zukünftigen Zustands eines Systems.

**17.** Verfahren nach Anspruch 16,
eingesetzt zu einer Überwachung und/oder Steuerung eines Systems.

**18.** Computerprogramm-Erzeugnis, das ein computerlesbares Speichermedium umfaßt, auf dem ein Programm gespeichert ist, das es einem Computer ermöglicht, nachdem es in einen Speicher des Computer geladen worden ist, folgende Schritte durchzuführen zur rechnergestützten Kompensation eines Ungleichgewichtszustands eines ersten technischen Systems:

- einem ersten neuronalen Netz, welches das erste technische System beschreibt, wird eine erste Eingangsgröße zugeführt;
- für die erste Eingangsgröße wird unter Verwendung des ersten neuronalen Netzes eine erste Ausgangsgröße ermittelt,
- die erste Ausgangsgröße wird als eine zweite Eingangsgröße einem zweiten neuronalen Netz zugeführt, welches ein zweites technisches System beschreibt;
- für die zweite Eingangsgröße wird unter Verwendung des zweiten neuronalen Netzes eine zweite Ausgangsgröße, welche einen Zustand des zweiten technischen Systems beschreibt, ermittelt,

**dadurch gekennzeichnet, dass**

- die erste Ausgangsgröße einen Ungleichgewichtszustand des ersten technischen Systems beschreibt
- und die zweite Ausgangsgröße derart ermittelt wird, dass der Ungleichgewichtszustand des ersten technischen Systems durch das zweite neuronale Netz kompensiert wird.

19. Computerlesbares Speichermedium, auf dem ein Programm gespeichert ist, das es einem Computer ermöglicht, nachdem es in einen Speicher des Computer geladen worden ist, folgende Schritte durchzuführen zur rechnergestützten Kompensation eines Ungleichgewichtszustands eines ersten technischen Systems:

- einem ersten neuronalen Netz, welches das erste technische System beschreibt, wird eine erste Eingangsgröße zugeführt;
- für die erste Eingangsgröße wird unter Verwendung des ersten neuronalen Netzes eine erste Ausgangsgröße ermittelt,
- die erste Ausgangsgröße wird als eine zweite Eingangsgröße einem zweiten neuronalen Netz zugeführt, welches ein zweites technisches System beschreibt;
- für die zweite Eingangsgröße wird unter Verwendung des zweiten neuronalen Netzes eine zweite Ausgangsgröße, welche einen Zustand des zweiten technischen Systems beschreibt, ermittelt,

**dadurch gekennzeichnet, dass**

- die erste Ausgangsgröße einen Ungleichgewichtszustand des ersten technischen Systems beschreibt

und die zweite Ausgangsgröße derart ermittelt wird, dass der Ungleichgewichtszustand des ersten technischen Systems durch das zweite neuronale Netz kompensiert wird.

**Claims**

1. Arrangement for the computer-supported compensation of an inequilibrium state of a first technical system,

   - having a first neural network, which describes the first technical system;
   - having a second neural network, which describes a second technical system;

   **characterized in that**

   - the first and the second neural network are connected to one another in such a way that an inequilibrium state of the first technical system can be compensated by the second neural network.

2. Arrangement according to Claim 1, in which the first neural network has at least a first input computing element and a second output computing element.

3. Arrangement according to Claim 1 or 2, in which the second neural network has at least a second input computing element and a second output computing element.

4. Arrangement according to one of Claims 1 to 3, in which at least some of the computing elements are artificial neurons.

5. Arrangement according to one of Claims 1 to 4, in which at least some of the connections between computing elements are of variable configuration.

6. Arrangement according to one of Claims 1 to 5, in which at least some of the connections have identical weighting values.

7. Arrangement according to one of Claims 1 to 6, in which the first technical system and the second technical system are each subsystems of a common overall system.

8. Arrangement according to one of Claims 1 to 6, in which the first technical system and the second technical system are identical.

9. Arrangement according to Claim 7 or 8, used for determining a dynamic of a system.

10. Arrangement according to one of Claims 7 to 9, used for predicting a future state of a system.

11. Arrangement according to Claim 10, used for monitoring and/or controlling a system.

12. Arrangement according to Claim 11, in which the system is a chemical reactor.

13. Method for the computer-supported compensation of an inequilibrium state of a first technical system,

- in which a first neural network, which describes the first technical system, is supplied with a first input variable;
- in which a first output variable is determined for the first input variable using the first neural. network;
- in which the first output variable is supplied, as a second input variable, to a second neural network which describes a second technical system;
- in which a second output variable, which describes a state of the second technical system, is determined for the second input variable using the second neural network, **characterized in that**
- the first output variable describes an inequilibrium state of the first technical system
- and the second output variable is determined in such a way that the inequilibrium state of the first technical system is compensated by the second neural network.

14. The method as claimed in Claim 13, in which the first technical system and the second technical system each describe a subsystem of a common overall system.

15. The method as claimed in Claim 14, in which a dynamic of the overall system is determined using the state of the second technical system.

16. The method as claimed in one of Claims 13 to 15, used for predicting a future state of a system.

17. The method as claimed in Claim 16, used for monitoring and/or controlling a system.

18. Computer program event which comprises a computer-readable storage medium on which a program is stored which, after it has been loaded into a memory of a computer, makes it possible for the computer to execute the following steps for the computer-supported compensation of an inequilibrium state of a first technical system:

- a first neural network, which describes the first technical system, is supplied with a first input variable;
- a first output variable is determined for the first input variable using the first neural network;
- the first output variable is supplied, as a second input variable, to a second neural network, which describes a second technical system;
- a second output variable, which describes a state of the second technical system, is determined for the second input variable using the second neural network,

**characterized in that**

- the first output variable describes an inequilibrium state of the first technical system
- and the second output variable is determined in such a way that the inequilibrium state of the first technical system is compensated by the second neural network.

**19.** Computer-readable storage medium on which a program is stored which, after it has been loaded into a memory of the computer, permits the computer to execute the following steps for the computer-supported compensation of an inequilibrium state of a first technical system:

- a first neural network, which describes the first technical system, is supplied with a first input variable;
- a first output variable is determined for the first input variable using the first neural network;
- the first output variable is supplied, as a second input variable, to a second neural network, which describes a second technical system;
- a second output variable, which describes a state of the second technical system, is determined for the second input variable using the second neural network,

**characterized in that**

- the first output variable describes an inequilibrium state of the first technical system
- and the second output variable is determined in such a way that the inequilibrium state of the first technical system is compensated by the second neural network.

**Revendications**

**1.** Ensemble pour la compensation assistée par ordinateur d'un état de déséquilibre d'un premier système technique, comprenant

- un premier réseau neuronal qui décrit le premier système technique;
- un deuxième réseau neuronal qui décrit un deuxième système technique;

**caractérisé en ce que**

- le premier réseau neuronal et le deuxième réseau neuronal sont reliés entre eux de manière qu'un état de déséquilibre du premier système technique peut être compensé par le deuxième réseau neuronal.

**2.** Ensemble selon la revendication 1, dans lequel le premier réseau neuronal présente au moins un premier élément de calcul d'entrée et un premier élément de calcul de sortie.

**3.** Ensemble selon la revendication 1 ou 2, dans lequel le deuxième réseau neuronal présente au moins un deuxième élément de calcul d'entrée et un deuxième élément de calcul de sortie.

**4.** Ensemble selon l'une des revendications 1 à 3, dans lequel les éléments de calcul sont, pour partie au moins, des neurones artificiels.

**5.** Ensemble selon l'une des revendications 1 à 4, dans lequel les connexions entre éléments de calcul sont configurées, pour partie au moins, de manière variable.

**6.** Ensemble selon l'une des revendications 1 à 5, dans lequel les connexions présentent, pour partie au moins, des mêmes valeurs de poids.

**7.** Ensemble selon l'une des revendications 1 à 6, dans lequel le premier système technique et le deuxième système technique sont respectivement un système partiel d'un système global commun.

**8.** Ensemble selon l'une des revendications 1 à 6, dans lequel le premier système technique et le deuxième système technique sont identiques.

**9.** Ensemble selon la revendication 7 ou 8, mis en oeuvre pour déterminer une dynamique d'un système.

**10.** Ensemble selon l'une des revendications 7 à 9, mis en oeuvre pour une prévision d'un état futur d'un système.

**11.** Ensemble selon la revendication 10, mis en oeuvre pour une surveillance et/ou une commande d'un système.

**12.** Ensemble selon la revendication 11, dans lequel le système est un réacteur chimique.

**13.** Procédé pour la compensation assistée par ordinateur d'un état de déséquilibre d'un premier système technique, dans lequel

- une première grandeur d'entrée est amenée à un premier réseau neuronal qui décrit le premier système technique;
- pour la première grandeur d'entrée est déterminée, moyennant l'utilisation du premier réseau neuronal, une première grandeur de sortie;
- la première grandeur de sortie est amenée en tant que deuxième grandeur d'entrée à un deuxième réseau neuronal qui décrit un deuxième système technique;
- pour la deuxième grandeur d'entrée est déterminée, moyennant l'utilisation du deuxième réseau neuronal, une deuxième grandeur de sortie qui décrit un état du deuxième système technique,

**caractérisé en ce que**

- la première grandeur de sortie décrit un état de déséquilibre du premier système technique et
- la deuxième grandeur de sortie est déterminée de manière telle que l'état de déséquilibre du premier système technique est compensé par le deuxième réseau neuronal.

**14.** Procédé selon la revendication 13, dans lequel le premier système technique et le deuxième système technique décrivent chacun un système partiel d'un système global commun.

**15.** Procédé selon la revendication 14, dans lequel une dynamique du système global est déterminée moyennant l'utilisation de l'état du deuxième système technique.

**16.** Procédé selon l'une des revendications 13 à 15, mis en oeuvre pour une prévision d'un état futur d'un système.

**17.** Procédé selon la revendication 16, mis en oeuvre pour une surveillance et/ou une commande d'un système.

**18.** Produit comportant un programme d'ordinateur et un support de stockage lisible par ordinateur, sur lequel est enregistré un programme permettant à un ordinateur, une fois qu'il a été chargé dans la mémoire de l'ordinateur, d'exécuter les étapes suivantes pour la compensation assistée par ordinateur d'un état de déséquilibre d'un premier système technique:

- une première grandeur d'entrée est amenée à un premier réseau neuronal qui décrit le premier système technique;
- pour la première grandeur d'entrée est déterminée, moyennant l'utilisation du premier réseau neuronal, une première grandeur de sortie;
- la première grandeur de sortie est amenée en tant que deuxième grandeur d'entrée à un deuxième réseau neuronal qui décrit un deuxième système technique;
- pour la deuxième grandeur d'entrée est déterminée, moyennant l'utilisation du deuxième réseau neuronal, une deuxième grandeur de sortie qui décrit un état du deuxième système technique,

**caractérisé en ce que**

- la première grandeur de sortie décrit un état de déséquilibre du premier système technique et
- la deuxième grandeur de sortie est déterminée de manière telle que l'état de déséquilibre du premier système technique est compensé par le deuxième réseau neuronal.

**19.** Support de stockage lisible par ordinateur et sur lequel est enregistré un programme permettant à un ordinateur, une fois qu'il a été chargé dans la mémoire de l'ordinateur, d'exécuter les étapes suivantes pour la compensation assistée par ordinateur d'un état de déséquilibre d'un premier système technique:

- une première grandeur d'entrée est amenée à un premier réseau neuronal qui décrit le premier système technique;
- pour la première grandeur d'entrée est déterminée, moyennant l'utilisation du premier réseau neuronal, une première grandeur de sortie;

- la première grandeur de sortie est amenée en tant que deuxième grandeur d'entrée à un deuxième réseau neuronal qui décrit un deuxième système technique;
- pour la deuxième grandeur d'entrée est déterminée, moyennant l'utilisation du deuxième réseau neuronal, une deuxième grandeur de sortie qui décrit un état du deuxième système technique,

**caractérisé en ce que**

- la première grandeur de sortie décrit un état de déséquilibre du premier système technique et
- la deuxième grandeur de sortie est déterminée de manière telle que l'état de déséquilibre du premier système technique est compensé par le deuxième réseau neuronal.

# FIG 1

FIG 2

# FIG 3

310 — Anlegen der ersten Eingangsgrösse

320 — Ermittlung eines Ungleichgewichtszustands

300 —

330 — Anlegen der zweiten Eingangsgrösse

340 — Kompensation des Ungleichgewichtszustands

# FIG 4

400

440

402

C

430

B

460

D

420

401

A

A

403

450 U$_{t-1}$

U$_t$ 410

FIG 5

FIG 6

FIG 7